Europäisches Patentamt

European Patent Office

Office européen des brevets

(19)

(11) Veröffentlichungsnummer: **0 009 203**
B1

(12) # EUROPÄISCHE PATENTSCHRIFT

(45) Veröffentlichungstag der Patentschrift: **16.02.83**

(51) Int. Cl.³: **H 04 J 4/00**

(21) Anmeldenummer: **79103394.7**

(22) Anmeldetag: **11.09.79**

(54) Verfahren und Schaltungsanordnung zur digitalen Audio/FDM- bzw. PCM/FDM-Umsetzung und umgekehrt.

(30) Priorität: **15.09.78 DE 2840256**

(43) Veröffentlichungstag der Anmeldung:
**02.04.80 Patentblatt 80/7**

(45) Bekanntmachung des Hinweises auf die Patenterteilung:
**16.02.83 Patentblatt 83/7**

(84) Benannte Vertragsstaaten:
**AT BE CH FR IT NL SE**

(56) Entgegenhaltungen:
**IEEE TRANSACTIONS ON CIRCUIT THEORY, Vol. CT—18, Nr. 6, November 1971, Seiten 702—711
New York, U.S.A.
L FREENY et al.: "Design of Digital Filters for an All Digital Frequency Division Multiplex-Time Division Multiplex Translator"**

**IEEE TRANSACTIONS ON COMMUNICATION TECHNOLOGY, Vol. COM—19, Nr. 1, Februar 1971, Seiten 63—71
New York, U.S.A.
C.F. KURTH "SSB/FDM Utilizing TDM Digital Filters"**

(73) Patentinhaber: **SIEMENS AKTIENGESELLSCHAFT
Berlin und München Wittelsbacherplatz 2
D-8000 München 2 (DE)**

(72) Erfinder: **Fettweis, Alfred, Prof., Dr.,
Im Königsbusch 18
D-4630 Bochum (DE)**

(56) Entgegenhaltungen:
**IEEE TRANSACTIONS ON CIRCUIT THEORY, Vol. CT—20, Nr. 4, Juli 1973, Seiten 408—415
New York, U.S.A.
C.F. KURTH: "Analog and Digital Filtering in Multiplex Communication Systems"**

**CABLES AND TRANSMISSION, Vol. 27, Nr. 4, Oktober 1973, Seiten 353—383
Paris, FR.
M.A. ROY et al.: "Considerations sur l'utilisation des techniques numériques appliquées au multiplexage en fréquence"**

## Verfahren und Schaltungsanordnung zur digitalen Audio/FDM-bzw. PCM/FDM-Umsetzung und umgekehrt

Die Erfindung betrifft en Verfahren zur digitalen Frequenzumsetzung von Audio-Signalen in Signale eines Frequenzmultiplexsystems (Audio/FDM-Umsetzung), bzw. zur Frequenzumsetzung von pulscordierten Signalen in signale eines Frequenzmultiplexsystems (PCM/FDM-Umsetzung), und umgekehrt bei dem die ursprünglichen Signale in einer hinsichtlich der Frequenzbandbreite begrenzten Kanalbreite vorliegen, sowie eine Schaltungsanordnung zur Durchführung dieses Verfahrens.

In den letzten Jahren wurde den Problemen der digitalen Audio/FDM- und PCM/FDM-Umsetzung beachtliche Aufmerksamkeit gewidmet und es wurden eine Reihe verschiedener Lösungen vorgeschlagen. Die meisten dieser Schemas basierten auf Auslöschungsmethoden, d.h. die Signalunterdrückung in unerwünschten Frequenzbereichen wird durch die Auslöschung von Signalen erhalten, die in speziell dafür vorgesehenen Übertragungspfaden gebildet werden. Die hohe Genauigkeit, die deshalb erforderlich ist, stellt für digitale Schaltungen an sich keine Probleme dar, wenn man von dem Aufwand absieht. Dies trifft insbesondere auf Anordnungen zu, die verhältnismäßig komplizierte Auslöschungsschemas enthalten, wie beispielsweise solche, die auf einem schnellen Fourier-Transformations-algorithmus (FFT) aufbauen. Eine beachtliche Vereinfachung kann nun erreicht werden durch solche Schemas, die nur eine Multiplikation mit $\pm 1$ (Proc. IEEE Int. Conf. Commun., Chicago, Ill., June 1977, Seiten 45.4—195 bis 45.4—199) brauchen, obwohl die hohen Genauigkeitsanforderungen für die Filter oder Allpaßnetzwerke dabei nicht erleichtert werden.

Weiterhin sind aus der Zeitschrift IEEE Transactions on Circuit Theory, Vol. CT—18, Nr. 6, Nov. 1971, Seiten 702 bis 711 und der Zeitschrift IEEE Transactions on Communication Technology, Vol. COM—19, No. 1, Febr. 1971, Seiten 63 bis 71, Verfahren zur digitalen Frequenzumsetzung von Audiosignalen in Signale eines Frequenzmultiplexsystems bzw. zur Frequenzumsetzung von pulscordierten Signalen in Signale eines Frequenzmultiplexsystems bereits bekannt. Auch bei diesen bekannten Verfahren liegen die ursprünglichen signale in einer hinsichtlich der Frequenzbandbreite begrenzten Kanalbreite vor. Es werden in diesen Veröffentlichungen, obwohl sie, wie bereits erwähnt, einschlägige Systeme beschreiben, gerade andersartige Vielfache für die Grundarbeitsrate vorgeschlagen, als dies beim Anmeldungsgegenstand der Fall ist. Schließlich ist es auch aus der Literaturstelle IEEE Transactions on Circuit Theory, Vol. CT—20, Nr. 4, Juli 1973, Seiten 408 bis 415 bekannt, Digitalfilter zu realisieren, bei denen eine Spektralbegrenzung auf 4 kHz vorgenommen und eine Abtastrate von 24 kHz, also vom sechsfachen Wert, verwendet wird.

Dies ist aber kein Problem der Umsetzung und es ist somit kein Hinweis auf die in einem Umsetzverfahren bzw. — system zu verwendende Abtastrate gegeben.

Der Erfindung liegt die Aufgabe zugrunde, für Verfahren und Schaltungen der eingangs genannten Art eine besonders passende Wahl der Modulationsschritte und der Trägerfrequenzen anzugeben. Es ist auf diese Weise möglich, alle Kanäle in ihren jeweiligen gewünschten Frequenzbereich zu schieben, wobei nur Multiplikationsprozesse mit den Zahlen $+1$, $-1$ und 0 erforderlich sind. Das gleiche Schema kann zur Umwandlung von Audio- in FDM-Signale ebenso gut verwendet werden wie zur Umwandlung von PCM- in FDM-Signale. Es gibt eine Reihe von geeigneten Schemas, von denen nur einige im Detail diskutierte seien, und zwar für ein 12- und ein 60-Kanalsystem.

Es wird dabei auch berücksichtigt, daß konventionelle Frequenz-Multiplex- (FDM-) Systeme bekanntlich davon Gebrauch machen, was man ein mehrstufiges Einweg-Modulations-Verfahren nennen könnte.

Ausgehend von dem einleitend genannten Verfahren wird diese Aufgabe erfindungsgemäß dadurch gelöst, daß zur Erzeugung von Abtastproben im Fall der Audio/FDM-Umsetzung und umgekehrt bzw. zur PCM/FDM-Umsetzung und umgekehrt als Grundarbeitsrate eine Arbeitsrate verwendet wird, deren Frequenzlage beim sechsfachen Wert der Kanalbreite liegt, und daß alle weiteren im Umsetzverfahren verwendeten Arbeitsraten ganzzahlige Vielfache der Grundarbeitsrate sind.

Vorteilhafte Ausführungen und hierfür mögliche Schaltungen sind in den Unteransprüchen angegeben.

Anhand von Ausführungsbeispielen wird die Erfindung nachstehend noch näher erläutert. Es zeigen in der Zeichnung

Tab. 1 eine beispielsweise Erklärung der in den folgenden Figuren verwendeten Symbole;

Fig. 1 eine vollständige Anordnung für ein Modulationsschema zur Erzeugung einer 60-Kanal-Sekundärgruppe SG;

Fig. 2 ein Modulationsschema zur Erzeugung der in Fig. 1 mit $B_1$ bis $B_6$ bezeichneten 2-Kanal-Untergruppen;

Fig. 3 eine weitere Anordnung zur Erzeugung von $B_1$ bzw. $B_2$ bis $B_6$;

Fig. 4 die Erzeugung von beispielsweise $B_1$ durch Verwendung eines Richtungsfilter, das die Übertragungsfunktionen der komplementären Filter $\tilde{F}_1$ und $\tilde{\tilde{F}}_1$ realisiert;

Fig. 5 eine Modulationsanordnung zur Erzeugung einer 4-Kanal-Untergruppe $C_1$ bzw. $C_2$ nach Fig. 1;

Fig. 5a eine weitere Möglichkeit zur Erzeu-

gung von $C_1$ bzw. $C_2$;

Fig. 6 die Erzeugung von $C_1$ durch Verwendung eines Richtungsfilters, das die Übertragungsfunktionen der komplementären Filter $\widetilde{F}_1^2$ und $\widetilde{\widetilde{F}}_1^2$ realisiert;

Fig. 7 eine Modulationsanordnung zur Erzeugung einer 8-Kanal-Untergruppe $D_1$ gem. Fig. 1;

Fig. 7a eine weitere Möglichkeit zur Erzeugung von $D_1$;

Fig. 8 die Erzeugung von $D_1$ durch Verwendung eines Richtungsfilters, das die Übertragungsfunktionen der komplementären Filter $\widetilde{F}_1^4$ und $\widetilde{\widetilde{F}}_1^4$ realisiert;

Fig. 9 eine Modulationsanordnung zur Erzeugung einer 12-Kanal-Gruppe $E_1$ und entsprechend $E_2$ bis $E_5$ gem. Fig. 1;

Fig. 10 die Erzeugung von $E_1$ durch Verwendung eines Richtungsfilters, das die Übertragungsfunktionen der komplementären Filter $\widetilde{F}_3$ und $\widetilde{\widetilde{F}}_3$ realisiert;

Fig. 11 eine Modulationsanordnung zur Erzeugung der in Fig. 1 mit $G_1$ bezeichneten 12-Kanal-Gruppe bei einer Arbeitsrate von 576 kHz;

Fig. 12 eine Modulationsanordnung der in Fig. 1 mit $G_3$ bezeichneten 12-Kanal-Gruppe;

Fig. 13 eine Modulationsanordnung zur Erzeugung der in Fig. 1 mit $G_5$ bezeichneten 12-Kanal-Gruppe;

Fig. 14 eine Modulationsanordnung zur Erzeugung der in Fig. 1 mit $G_2$ bezeichneten 12-Kanal-Gruppe;

Fig. 15 eine Modulationsanordnung zur Erzeugung der in Fig. 1 mit $G_4$ bezeichneten 12-Kanal-Gruppe;

Fig. 16 eine Zusammenschaltung der 12-Kanal-Gruppe SG (312—552 kHz);

Fig. 17 die Erzeugung von $G_1+G_3+G_5$ unter Verwendung von Richtungsfiltern, die die Übertragungsfunktionen der komplementären Filter $\widetilde{F}_4$ und $\widetilde{\widetilde{F}}_4$ bzw. $\widetilde{F}_5$ und $\widetilde{\widetilde{F}}_5$ realisieren;

Fig. 18 die Erzeugung von $G_2+G_4$ durch Verwendung eines Richtungsfilters, das die Übertragungsfunktionen der komplementären Filter $\widetilde{F}_6$ und $\widetilde{\widetilde{F}}_6$ realisiert;

Fig. 18a eine weitere Anordnung zur Erzeugung von $G_1$ durch Verwendung des gleichen Filters $F_5$ wie in Fig. 12;

Fig. 18b eine weitere Anordnung zur Erzeugung von $G_5$ durch Verwendung des gleichen Filters $F_5$ wie in Fig. 12;

Fig. 19 das Blockschaltbild zur Erzeugung einer 12-Kanal-Gruppe E;

Fig. 20 die Frequenzbereiche für die Durchlaß- und Sperrbereiche, die für die Filter $F_7$ bis $F_{13}$ festzulegen sind, und die Spektralverteilung der 12-Kanal-Gruppe E;

Fig. 21 einige mögliche Modifikationen für das in Fig. 19 gezeigte Schema;

Fig. 22 zwei mögliche Lösungen zur Einführung eines Außerband-signalisierungstones.

1. Bei der Erfindung wird von folgenden Überlegungen ausgegangen.

In jedem Fall sollte man betonen, daß der Vergleich nicht nur zwischen diesen Schemas untereinander, sondern insbesondere zwischen diesen Schemas und den vorstehend besprochenen anderen Schemas nicht einfach durch Abzählen der Multiplikationen durchgeführt werden sollte, die während einer Zeiteinheit erforderlich sind, wie dies vielfach getan wird. Es ist nämlich auch die Genauigkeit, mit der die Multiplikationen ausgeführt werden müssen, von großer Wichtigkeit. Ein anderer bedeutender Aspekt ist bekanntlich die Zahl der Verzögerungsglieder. Multiplizierer und Addierer in digitalen Schaltung können im sogenannten time-sharing-Verfahren zwischen vielen Kanälen betrieben werden, während dies bei Verzögerungsgliedern nicht möglich ist; demzufolge können Verzögerungsglieder, obwohl sie an sich verhältnismäßig billig sind, sogar zum entscheidenden Kostenfaktor werden. Schließlich können die ebenfalls erforderlichen logischen Schaltungsstrukturen nicht vernachlässigt werden. Es ist auch zu beachten, daß die Kostenbetrachtung sich nicht nur auf die unmittelbar erforderlichen Schaltungskosten selbst beziehen muß, sondern auch auf den Leistungsverbrauch in den Schaltungen.

Die hier erzielten Ergebnisse sind auch anwendbar, wenn der neuerliche Fortschritt in analogen Abtastfiltern (Filter aus geschalteten Kapzitäten) dahin führen könnte, die Anwendung solcher Filter ins Auge zu fassen. Es wäre dann erforderlich, auf einem Einweg-Modulatdions-Verfahren aufzubauen, und auch dabei wäre die Einfachheit der hier benötigten Modulatoren ein ernstzunehmender Vorteil.

2. Grundlegende Prinzipien.

2.1 Sende- und Empfangsschaltungen.

Die Diskussion der verschiedenen Modulationsschemas soll hier auf den Übergang vom Audiobereich in den FDM-Bereich, oder was hierzu äquivalent ist, vom Übergang von PCM-Systemen auf FDM-Systeme beschränkt werden.

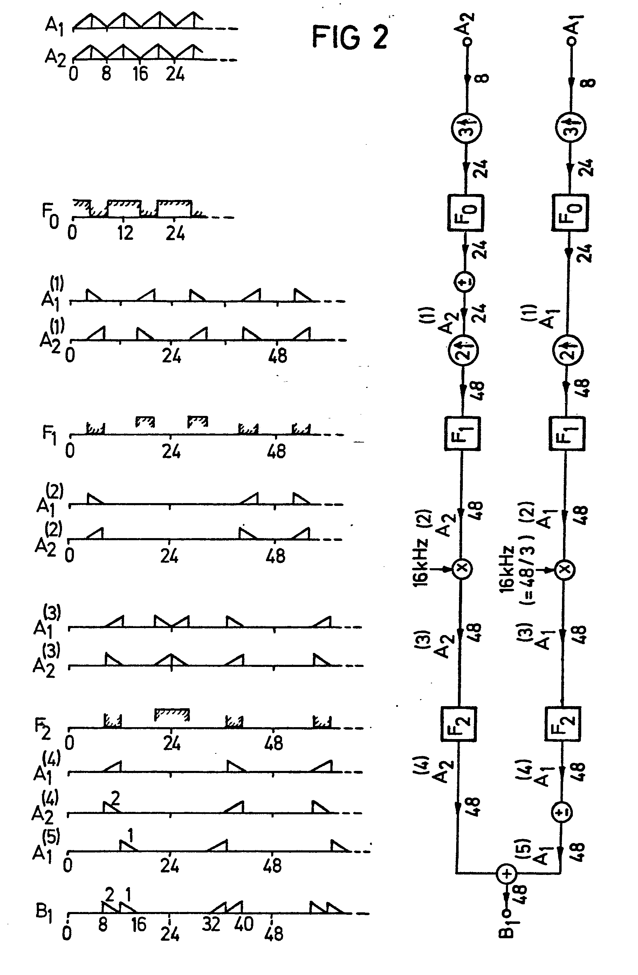

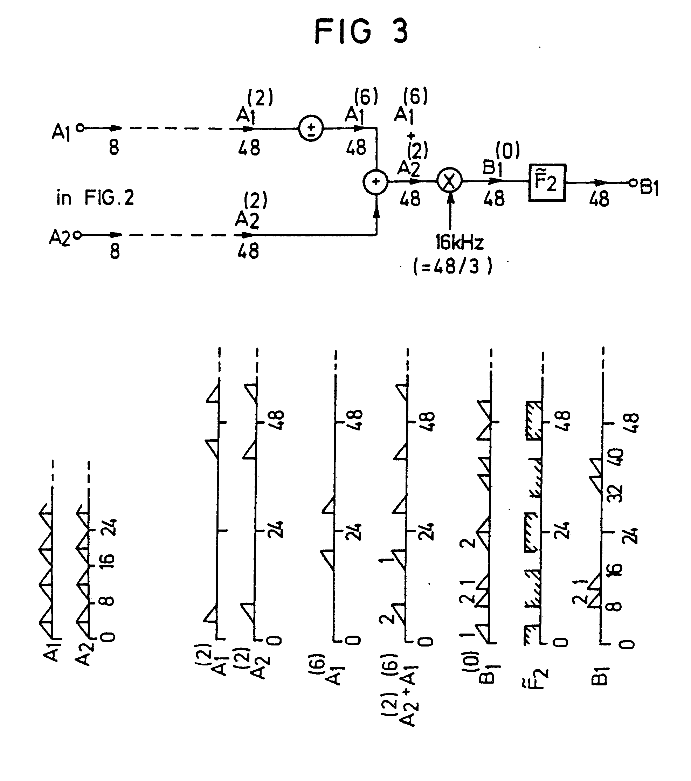

Es liegt auf der Hand, daß das gleiche Schema, obwohl nur für eine Richtung beschrieben, auch für den Übergang von FDM-Systemen in den Audio-Frequenzbereich und somit auch von FDM- auf PCM-Systeme anwendbar ist. Es ist z.B. u.a. zu beachten, daß Addierer, wie beispielsweise in Fig. 2 u. dgl. dann Verzweigungspunkte werden. Wie auch von den üblichen FDM-Systemen bekannt ist, unterscheiden sich die detaillierten Filteranforderungen in der Regel für die beiden Richtungen, aber es ist verhältnismäßig einfach möglich, eine Filterspezifikation anzugeben, die für beide Übertragungsrichtungen die auftretenden Anforderungen erfüllt. In diesem Fall kann der gleiche Schaltungstyp für beide Übertragungsrichtungen verwendet werden.

### 2.2 Wahl der Trägerfrequenzen

Die Trägerfrequenzen, die zur Erzeugung der verschiedenen Frequenzumsetzungen nötig sind, sollten so gewählt werden, daß in den beteiligten Produkt-Modulatoren die Signale nur mit den Zahlen + 1, −1, und 0 multipliziert werden müssen. Es läßt sich dies dadurch erreichen, daß nur solche Trägerfrequenzen $f_c$ verwendet werden, die entweder 1/2, 1/3, 1/4 oder 1/6 von der Arbeitsrate F (Abtastrate) des jeweils betrachteten Modulators betragen.

Betrachtet man Multiplikationen mit sin- oder cos-Funktionen, sind die beteiligten Zahlenfolgen durch

$$sind\ (2\pi\nu f_c/F)$$

oder

$$cos\ (2\pi\nu f_c/F)$$

gegeben, wobei

$$\nu = \ldots -1,0,1,2,\ldots\ .$$

Die sin-Funktion liefert dann die Folgen

$$f_c = F/3:\ \ldots -1,0,1,-1,0,\ldots \tag{1}$$

$$f_c = F/4:\ \ldots -1,0,1,0,-1,0,\ldots \tag{2}$$

$$f_c = F/6:\ \ldots -1,0,1,1,0,-1,-1,0,\ldots \tag{3}$$

wobei die erste und dritte Folge in der angegebenen Form gültig sind, wenn man den zu vernachlässigenden allgemeinen Faktor $\sqrt{3/2}$ außer acht läßt. Die cos-Funktion liefert die Folgen

$$f_c = F/2:\ \ldots -1,1,-1,1,\ldots \tag{4}$$

$$f_c = F/3:\ \ldots -1,2,-1,-1,2,\ldots$$

$$f_c = F/4:\ \ldots 0,1,0,-1,0,1,\ldots \tag{5}$$

$$f_c = F/6:\ \ldots 1,2,1,-1,-2,-1,1,2,\ldots$$

bei denen die zweite und vierte Folge an sich mit dem Faktor 2 multipliziert ist. Zu beachten ist, daß Folgen, die Multiplikationen mit +2 oder −2 bedingen, nicht gebraucht werden, um das hier angestrebte Ziel zu erreichte. Troptzdem können sie beinahe gleichwertig verwendet werden, weil sie nur Rechenoperationen erfordern, die verhältnismäßig einfach in einem Binär-System ausgeführt werden können.

Die Multiplikation mit der durch Gleichung (4) definierten Folge bedeutet bekanntlich (vgl. C.F. Kurth, "SSB/FDM utilizing TDM digitial filters", IEEE Transact. COM—19 (1971) 63—71) eine Umkehrung des Spektrums in jedem Nyquist-Intervall. Diese Operation ist deshalb von besonderer Bedeutung und soll nicht explizit als Multiplikation behandelt werden; sie wird stattdessen durch das Symbol "±" dargestellt. Obwohl die durch die Gleichung (1) und (3) definierten Folgen sich deutlich unterscheiden, ist erkennbar, daß jede von ihnen im allgemeinen dazu benutzt werden kann, um den angegebenen Effekt zu erreichen. Beide Folgen enthalten dieselbe Zahl von Elementen, nämlich 0, 1 und −1. Trotzdem ist die durch Gleichung (1) gegebene Folge, die die "Lange 3" hat, etwas einfacher als die durch Gleichung (3) gegebene Folge und wird deshalb bevorzugt. Es ist auch zu beachten, daß eine Multiplikation von Gleichung (1) mit Gleichung (4) die Gleichung (3) mit einer Vorzeichenumkehr liefert, während Gleichung (3) bei Multiplikation mit Gleichung (4) die Gleichung (1) mit einer Vorzeichenumkehr liefert.

### 2.3 Wahl der Grundarbeitsrate

Es müssen alle Arbeitsraten in der gesamten Anordnung Vielfache der Grundarbeitsrate sein, d.h. der Arbeitsrate des ersten Filterabschnitts. Es ist deshalb die Wahl dieser Rate von besonderer Bedeutung. Eine ganze Reihe von Gründen wird im folgenden gegeben, um zu zeigen, daß die Frequenz 24 kHz für diese Wahl besonders gerechtgertigt ist, wenn von einer Bandbreite der ursprünglichen Kanäle von 4 kHz ausgegangen wird.

a) In einem PCM/FDM-Umwandlungsschema müssen alle Arbeitsraten Vielfache der Grund-PCM-Abtastrate von 8 kHz sein. Für Audio/FDM-Umwandlungen besteht eine solche strenge Forderung nicht, obwohl eine Reihe von Vereinfachungen dann erhalten werden, wenn man für diesen Fall innerhalb des Grunddrahmens von 4 kHz Abstand bleibt, d.h. wenn alle Arbeitsraten Vielfache von 4 kHz sind. Es erscheint deshalb empfehlenswert, ein Schema vorzusehen, das für beide Anwendungsfälle verwendbar ist, ein Schema also, bei dem alle Arbeitsraten zugleich Vielfache von 8 kHz sind.

Für jeden Kanal werden nämlich an den Bandpaß die strengsten Filteranforderungen gestellt, der das später zu verarbeitende Seitenband auszufiltern hat. Dieses Filter sollte bei der niedrigstmöglichen Arbeitsrate betrieben werden, da dies die größtmögliche relative Filterbandbreite sicherstellt und damit die geringsten Genauigkeitsanforderungen für die Filterkoeffizienten nötig macht und die größten Möglichkeiten bietet, vorgegebene Filterschaltungen für viele Kanäle im time-sharing-Verfahren zu verwenden. Andererseits ist der in einem digitalen Filter tatsächlich ausnützbare Frequenzbereich gleich einem Nyquist-Intervall, d.h. in der Breite gleich der halben Arbeitsrate. Das niedrigste brauchbare Nyquist-Intervall muß deshalb größer sein als die für einen Kanal vorgesehene Bandbreite, d.h. die Arbeitsrate eines hierfür in Frage kommenden Filters kann sicher nicht niedriger als 12 kHz sein.

Für PCM/FDM-Umwandlung ist die Spektralverteilung des dekodierten PCM-Signals so, wie beispielsweise für $A_1$ und $A_2$ in Fig. 2 gezeigt. Es geht daraus hervor, daß das niedrigste Vielfache von 8 kHz, nämlich 16 kHz, deshalb nicht als Arbeitsrate in Frage kommt, weil kein bandpaßfilter in ein Nyquist-Intervall passen würde. Dies führt zu einer Arbeitsrate von 24 kHz.

Für Audio-FDM-Modulatdion hängt die Spektralverteilung des zu filternden signals für das zu betrachtende Bandpaßfilter von der Trägerfrequenz ab, die für den vorhergehenden Modulator verwendet wurde und dem analogen Vorfilter, das zu Vermeidung von unerwünschten Überlappungen von Audiosignal und einem Seitenband des Modulationsproduktes erforderlich ist. Solche unerwünschten Überlappungen können aber durch Filterung nur vermieden werden, wenn die Trägerfrequenz wenigstens gleich der halben Bandbreite ist, die pro Kanal zur Verfügung steht, d.h. im Beispiel von 4 kHz Kanalbreite wenigstens gleich 2 kHz. Da der Nyquist-Bereich größer als dieser Wert sein muß und zusätzlich mindestens die Breite von einem Kanal haben, muß, wird die niedrigste Arbeitsrate in dieser Hinsicht wenigstens 16 kHz. Die vorerwähnte Vorfilterung erleichtert sich jedoch beträchtlich, wenn man anstelle von diesem Wert einen Wert von 24 kHz annimmt, zu dem man auch bei der PCM/FDM-Umwandlung gelangt ist.

b) Inerster Näherung erscheint es, daß eine begründete Wahl darin zu sehen ist, das Nyquist-Intervall gleichmäßig zwischen dem unteren Sperrbereich, dem Durchlaßbereich und dem oberen Sperrbereich aufzuteilen. Dies führt für den Nyquist-Bereich auf $3 \times 4 = 12$ kHz und demzufolge für die niedrigste Arbeitsrate auf 24 kHz.

c) Wie unter Punkt a) bereits erwähnt, ist es im Fall der Audio/FDM-Umwandlung vorzuziehen, innerhalb des Grundrahmens von 4 kHz Abstand zu bleiben. Unter diesen Bedingungen ist die Frequenz 4 kHz die niedrigstmögliche Modulationsfrequenz. Will man dabei die unter Abschnitt 2.2 dargestellten Richtlinien für eine Modulation ohne tatsächliche Multiplizierer beachten, könnte die Arbeitsrate für den zu betrachtenden Modulator entweder $2 \times 4 = 8$, $3 \times 4 = 12$, $4 \times 4 = 16$ oder $6 \times 4 = 24$ kHz sein, wobei die jeweils entsprechend zuzuordnenden Nyquist-Bereiche 4, 6, 8 und 12 kHz breit sind. Nur der letzte Wert ist brauchbar, da er der einzige ist, der ausreichend Platz bietet, um in einem Nyquist-Intervall den durchzulassenden kanal und auch den unteren und oberen Sperrbereich unterzubringen.

d) Digitale Filter lassen sich verhältnismäßig einfach arithmetisch-symmetrisch realisieren, wenn die Mittenfrequenz gleich einem Viertel der Arbeitsrate ist. Solche Filter haben den Vorteil, daß sie nur die halbe Zahl an Addierern und Multiplizierern brauchen. (Im einzelnen ist dies in der Literaturstelle "Proc. Inst. Elec. Eng." 117, August 1970, Seiten 1585—1590 ausgeführt). Das diedrigstmögliche Seitenband, das im Fall der PCM/FDM-Umwandlung ausgewählt werden kann und das bevorzugt auch für Audio/FDM-Umwandlung ausgewählt werden sollte, liegt im Bereich von 4 bis 8 kHz, woraus sich somit eine Mittenfrequenz von 6 kHz ergibt. Wenn man in die Lage kommen will, auch von der soeben besprochenen Möglichkeit Gebrauch zu machen, sollte die Arbeitsrate $4 \times 6 = 24$ kHz sein.

e) Es besteht ferner Interesse daran, diejenigen Gruppenfrequenzbereicht zu benutzen, die mit den Frequenzbereichen zusammenfallen, die für die heute üblichen fünf Gruppen in einer Sekundärgruppe festgelegt sind, d.h. mit Frequenzbereichen, die sich von 312 bis 360, von 360 bis 408, von 408 bis 456, von 456 bis 504 und von 504 bis 552 kHz erstrecken. Um diese Frequenzlage zu erreichen, ist es nützlich, wenn die Grundabtastrate ein Teiler von 312, 360, 408, 456, 504 und 552 kHz ist. Der größte gemeinsame Teiler für diese Frequenzen ist wiederum die Frequenz 24 kHz.

2.4 Wahl der Kanalzahlen

Im Hinblock auf die hierarchische Struktur, die universell für FDM-Systeme vorgegeben ist, sollte ein Modulationsschema entweder für eine Gruppe (Primärgruppe 12 Kanäle) oder eine Übergruppe (Sekundärgruppe, 60 Kanäle) aufgestellt werden. Das Grund-PCM-System, das beispeislweise in USA und Japan vorgegeben ist und 24 Kanäle vorsieht, ist in der Kanalzahl kompatibel mit der ersten Wahl (zwei Primärgruppen für ein PCM-System), aber nicht mit der zweiten (60 ist durch 24 nicht teilbar). Andererseits ist das in Europa verwendete PCM-System, d.h. also ein System mit 30 Kanälen, in der Kanalzahl mit der ersten Wahl nicht kompatibel, jedoch mit der zweiten (zwei PCM-Systeme für eine Sekundärgruppe).

Auch besteht ein bestimmtes Interesse daran, eine möglichst geringe Zahl von eigentlichen Filterschaltungen einzusetzen und diese für möglichst viele Kanäle im time-sharing-Verfahren zu betreiben. insbesondere wäre es nützlich, nur eine Filterschaltung für alle Filter mit den strengsten anforderungen in einem System zu haben. Nimmt man eine Grundarbeitsrate von 24 kHz, wie dies in Abschnitt 2.3 diskutiert wurde, würde dies für ein 60-Kanal-System zu einer Arbeitsrate von insgesamt $60 \times 24 = 10^3 = 1,44$ MHz führen.

Die Zahl der pro Abtastprobe benötigten Bits liegt etwa zwischen 20 und 25. Die Bit-Rate, bei der die logischen Schaltungsteile zu arbeiten haben, liegt demzufolge zwischen $20 \times 1,44 = 28,8$ Mbits/sec und $25 \times 1,44 = 36$ Mbits/sec. Dies läßt sich auch beim heutigen Stand der Technologie erreichen.

Aus diesen Gründen scheint es angemessen, insbesondere einem 60-Kanal-System der Vorzug zu geben. Um die Flexibilität zu wahren, sollte ein solches Schema vorzugsweise in 12 einzelne Kanalgruppen unterteilt sein. Eine direkte Lösung für eine 12-Kanal-Grundgruppe wird in Abschnitt 3.3 ebenfalls gezeigt.

2.5 Wahl der Zahl für die Modulationsschritte

In Abschnitt 2.3 a) wurde auf die Bedeutung hingewiesen, die erforderliche Filterung bei der niedrigstmöglichen Rate durchzuführen. Dieser Grundsatz sollte nicht nur für die erste Filterstufe, d.h. also für die Filter mit den strengsten Anforderungen, sondern so gut wi möglich auch für alle weiteren Filterstufen beachtet werden. Dies beinhaltet, daß der Zuwachs an Arbeitsrate in möglichst kleinen Schritten ausgeführt werden sollte. Dies wiederum bedingt, daß der Faktor, mit dem die Grundarbeitsrate multipliziert werden, muß, um zur letzten Arbeitsrate zu gelangen, auis Primfaktoren zusammengesetzt sein sollte, die so klein wie möglich sind, vorzugsweise 2 oder 3.

Der Faktor 2 ist auch deshalb vorteilhaft, weil es dann im Hinblock auf die gleichzeitige Verdopplung der Kanalzahl möglich wird, Richtungsfilter zu verwenden. Es ist zu beachten, daß ein Richtungsfilter im Prinzip aus einem Paar komplementärer Filter zusammengesetzt ist, die einen gemeinsamen Ausgang (Eingang) haben, wobei Filter dann als komplementär bezeichnet werden, wenn eines davon den Durchlaßbereich dort hat, wo das andere den Sperrbereich hat und umgekehrt. Ein Wellendigitalfilter ist von Haus aus, ein Richtungsfilter, da die beiden Übertragungsfunktionen, die man zwischen einer Eingangsklemme und den beiden vorhandenen Ausgangsklemmen erhält, von denen üblicherweise nur eine benutzt wird, bekanntlich komplementär sind. Dies kann zu einer Ersparnis in Schaltungsstrukturen führen.

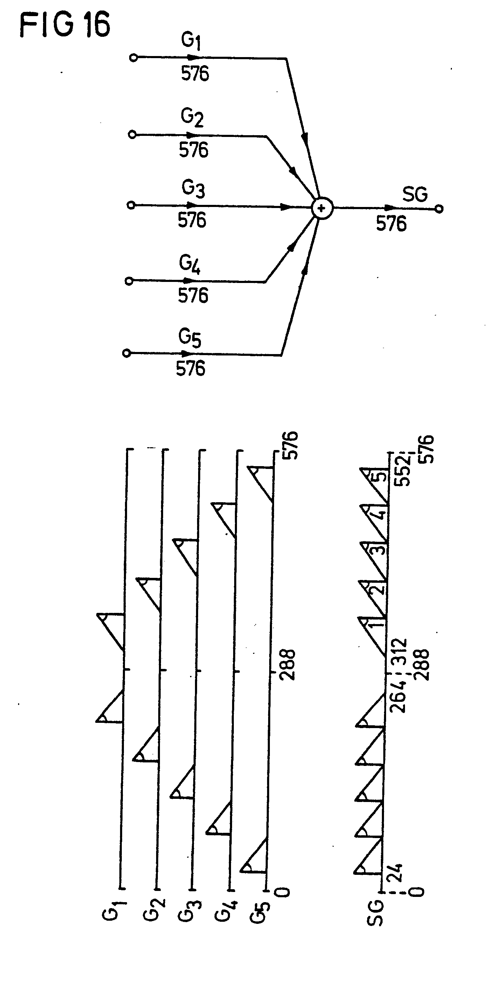

In einem 60-Kanal-System strebt man an, den endgültigen Bereich der Grund-Sekundärgruppen, d.h. den Frequenzbereich von 312 bis 552 kHz, in einer unmittelbaren Weise zu erzielen. Wenn man die Grundarbeitsrate von Abschnitt 2.3 nimmt, dann müssen alle Arbeitsraten Vielfache von 24 kHz sein. Andererseits muß auf Grund des Abtast-Theorems die Abtastrate für den Frequenzbereich von 312 bis 552 kHz in dem speziellen Fall z.B. entsprechend Fig. 16 größer als 552 kHz, aber kleiner als $2 \times 312 = 624$ kHz sein. Demzufolge sind die beiden Möglichkeiten 576 kHz und 600 kHz. Von diesen beiden ist die erstgenannte $2 \times 2 \times 2 \times 3 \times 24$ kHz, die zweite $5 \times 5 \times 24$ kHz. Demzulfoge ist die erste Wahl zu bevorzugen.

Schließlich sollte ein zweites Kriterium in Betracht gezogen werden, demzufolge die beiden vorstehenden Möglichkeiten etwa gleich gut sind. Es ist nämlich erforderlich, ein konventionelles Analogfilter nach der endgültigen D/A-(Digital/Analog)-Umwandlung vorzusehen. Kritische Werte für dieses Filter sind jeweils die relative Breite der oberen und unteren Übergangsbereiche zwischen Durchlaß- und Sperrbereich. Für 576 kHz sind die entsprechenden Werte $2(576—552)/576 = 0,0833$. $2(312—288)/288 = 0,1667$, und für 600 kHz sind diese Werte entsprechend $2(600—552)/600 = 0,16$ und $2(312—300)/300 = 0,08$. Diese Zahlen unterscheiden sich lediglich um einige Prozent, wenn man davon absieht, daß im ersten Fall der obere Übergangsbereich kritischer ist und im zweiten Fall der untere Übergangsbereich.

Für das 12-Kanal-System ist die Grundgruppe, zu der man gelangen möchte, zwischen 60 und 108 kHz. Es gibt kein Vielfaches von 24 kHz, für das man die Anforderungen erfüllen könnte, da es größer als 108 kHz, jedoch kleiner als $2 \times 60 = 120$ khz ist.

Demzufolge muß man eine Frequenzauswahl treffen, die unterschiedlich gegenüber der der Grundgruppe ist. Die Wahl, die zur niedrigstmöglichen Abtastrate führt, ist eine Frequenzlage, die zwischen 64 und 112 kHz liegt, mit einer Arbeitsrate von $5 \times 24 = 120$ kHz. Die Lösung, zu der man auf diesem Weg gelangt, ist nicht ganz so elegant wie für das 60-Kanal-System. Immerhin sind für das der D/A-Umwandlung folgende Filter die relativen Breiten für den oberen und unteren Übergangsbereich nunmehr die gleichen ($16/120 = 8/60 = 0,133$) was optimal erscheint.

3. Beschreibung der Modulationsschema

3.1 Symbole und Bezeichnungen

Die im folgenden verwendeten Symbole sind in Tabelle 1 zusammengefaßt. Es bedeuten $F_0$, $F_1$ bis $F_{13}$ Filter. Die beispielsweise Bezeichnung $\widetilde{F}_2$ bezieht sich auf ein Filter, das eine ähnliche Funktion wie $F_2$ hat, aber das in einer anderen Anordnung zur Erzeugung der gleichen Spektra verwendet wird. Die beispielsweisen Bezeichnungen $F_1^2$, $F_2^2$ und $\widetilde{F}_2^2$ machen kenntlich, daß die korrespondierenden Filter entsprechend die gleichen wie die Filter, $F_1$, $F_2$ und $\widetilde{F}_2$ sind, aber, daß ihre Arbeitsrate doppelt so hoch ist. Daraus geht hervor, daß die mit $F_1^4$, $F_2^4$ und $\widetilde{F}_2^4$ benannten Filter entsprechend wiederum die gleichen sind wie die mit $F_1$, $F_2$ und $\widetilde{F}_2$ bezeichneten, jedoch werden sie mit der vierfachen Arbeitsrate betrieben. Durchlaß- und Sperrbereich von Filtern sind in der für Filteranforderung üblichen Weise dargestellt. In Frequenzbereichen, für die weder Durchlaßbereichnoch Sperrbereich-Symbole angegeben sind, brauchen keinerlei Dämpfungsandorderungen festgelegt werden. Eine Bezeichnung wie beispielsweise $\overline{F}_1$ bezieht sich auf ein Filter, das komplementär zu einem mit $F_1$ bezeichneten Filter ist. Ein Richtungsfilter ist als ein Paar komplementärer Filter innerhalb eines Blockschaltbildes dargestellt, das eine gemeinsame Ausgangsklemme hat. Die vorstehenden Bezeichnungen haben unter entsprechender Änderung der indizes auch für die übrigen Filter Gültigkeit.

Zahlen unter Signalpfeilen in den dargestellten Flußdiagrammen beziehen sich auf die Abtastrate, mit der das jeweilige signal an dieser Stelle erscheint. Ein kleiner vertikal nach oben zeigender Pfeil innerhalb eines Kreises zeigt an, daß die Abtastrate um den Faktor erhöht wird, der unmittelbar neben dem Pfeil steht. Für diesen Zuwachs selbst ist stets anzunehmen, daß er durch Auffüllen mit Nullen in allen neu eingeführten Abtastmomenten erzeugt wird. Ein Modulator wird durch ein Multiplikaktionszeichen innerhalb eines Kreises dargestellt und das Modulationssignal und seine Frequenz sind als eigener Pfeil gezeigt. Eine Multiplikation mit der durch Gleichung (4) definierten Folge, d.h. eine Vorzeichenumkehr für jede zweite Abtastprobe, wird durch das Symbol "$\pm$" innerhalb eines Kreises dargestellt.

### 3.2 60-Kanal-System

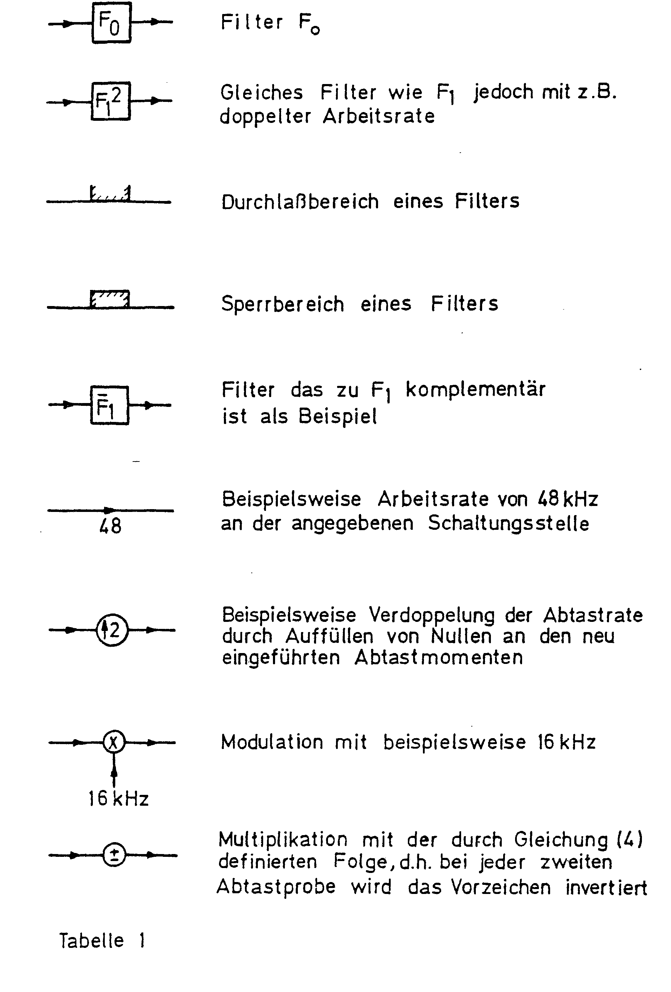

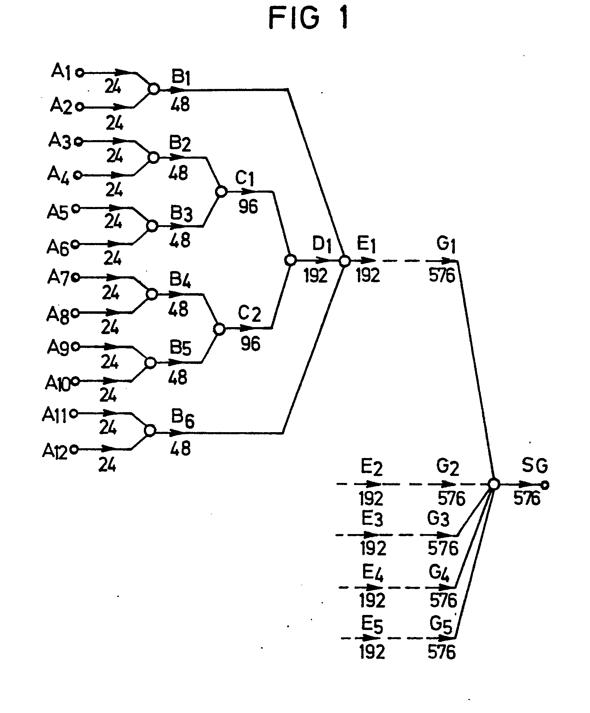

Das allgemeine Schema, nach dem die Modulation bzw. Umwandlung durchgeführt wird, ist in Fig. 1 dargestellt. Zwölf einzelne Kanäle $A_1$ bis $A_{12}$ mit der Abtastrate von 8 kHz im Falle der PCM/FDM-Umwandlung und 24 kHz für den Fall der Audio-FDM-Umwandlung werden zunächst in sechs 2-Kanal-Untergruppen $B_1$ bis $B_6$ zusammengefaßt und dafür eine Abtastrate von 48 kHz vorgesehen. Die Untergruppen $B_2$ bis $B_5$ werden dann in zwei 4-Kanal-Untergruppen $C_1$ und $C_2$ bei einer Abtastrate von 96 kHz zusammengefaßt und dann in eine einzige 8-Kanal-Untergruppe $D_1$, für die eine Abtastrate von 192 kHz vorgesehen ist. Diese letztere wiederum wird dann mit $B_1$ und $B_6$ zu einer 12-Kanal-Gruppe $E_1$ zusammengefaßt und hierfür eine Abtastrate von 192 kHz verwendet. In entsprechender Weise werden die Gruppen $E_2$ bis $E_5$ gebildet, die somit alle den gleichen Frequenzbereich belegen. Im nächsten Schritt werden die Gruppen $E_1$ bis $E_5$ unmittelbar individuell moduliert und/oder gefiltert, so daß sie die gewünschte endgültige Lage für die Bänder $G_1$ bis $G_5$ — wobei eine Abtastrate von 576 kHz vorgesehen ist — erreichen, d.h. entsprechend die Frequenzbänder 312 bis 360, 360 bis 408, 408 bis 456, 456 bis 504 und 504 bis 552 khz; die Grundsekundärgruppe SG, für die eine Abtastrate von 576 kHz verwendet wird, wird dann durch die Kombination von $G_1$ bis $G_5$ erzeugt.

In einer weiter Lösung, die in Fig. 1 nicht dargestellt ist, können $G_1$, $G_3$ und $G_5$ gemeinsam aus $E_1$, $E_3$ und $E_5$, und $G_2$ und auch $G_4$ gemeinsam aus $E_2$ und $E_4$ gebildet werden und die daraus entstehenden Ergebnisse zur Bildung der Sekundärgruppe SG verwendet werden.

Die Details für das vorstehende Verfahren sind in den Fig. 2 bis 18b angegeben. Zur besseren Übersicht ist weiterhin in den Figuren im oberen Teil stets das Blockdiagramm gezeigt und senkrecht darunter sind die Spektren der verschiedenen Signale und auch die Frequenzbereiche gezeichnet für die Durchlaßbereichs- und Sperrbereichsforderungen, die für die Filter festgelegt werden müssen. Zur leichteren Übersicht sind weiterhin die verschiedenen Signale, die an Zwischenstellen der Schaltungen erscheinen, in den Blockdiagrammen mit $A_1^{(1)}$, $A_1^{(2)}$, ..., $B_1^{(1)}$, ... usw. bezeichnet. Zu beachten ist insbesondere der Vorteil, daß alle Modulationsfrequenzen so gewählt sind, daß in den Modulatoren nur Multiplikationen mit $+1$, $-1$ und 0 benötigt werden. Die Schaltungen nach den Fig. 2 und 3 sind insbesondere für den Fall der PCM/FDM-Umwandlung dargestellt. Für den Fall der Audio/FDM-Umwandlung muß der Zuwachs für die Abtastrate um den Faktor 3, der sofort an Anfang stattfindet, weggelassen werden, da man dabei direkt von der Abtastrate 24 kHz ausgeht.

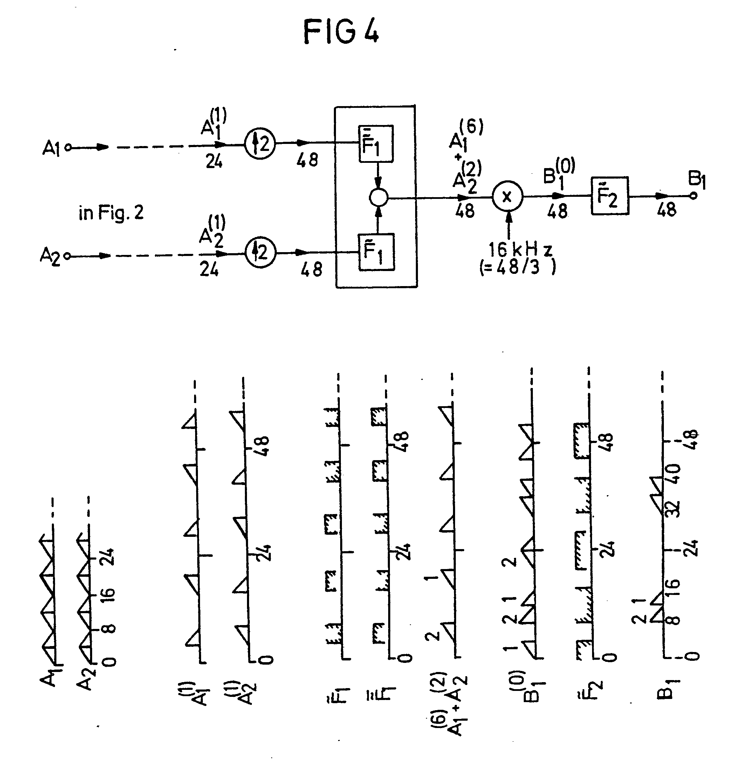

Einige andere Lösungen zur Gewinnung gewisser Teile des Schemas sind in den Fig. 3, 4, 5a, 6, 7a, 8, 10, 17 und 18 gezeigt. Die meisten beinhalten dabei Richtungsfilter wie in den Fig. 4, 6, 8, 10, 17 und 18. Zur Erzeugung der Untergruppen $C_1$ und $D_1$ lassen sich ähnliche Lösungen zu der von Fig. 3 für die Erzeugung von $B_1$ angeben, ohne daß hier im einzelnen darauf eingegangen werden müßte. Andere Lösungsmöglichkeiten bestehen ebenfalls; so beispielsweise, anstelle einer Modulation mit einer Frequenz, die gleich 1/3 der Arbeitsrate ist, ist es üblicherweise möglich, eine Modulationsfrequenz mit 1/6 der Abtastrate zu verwenden, wenn einige einfache passende Modifikationen angewendet werden.

In einigen der Figuren sind Zahlen zwischen 1 und 12 in einigen Spektraldarstellungen angegeben. Diese Zahlen geben an, welcher der einzelnen Kanäle $A_1$ bis $A_{12}$, oder welche der Gruppen $E_1$ bis $E_5$, die Spektrallage belegen.

Die Filter $F_1$ und $F_2$ bzw. $\tilde{F}_2$ usw. sind nicht nur zur Erzeugung von $B_1$ herangezogen, sondern auch zur Erzeugung von $C_1$ bzw. $D_1$, jedoch entsprechend mit einer doppelten bzw. vierfachen Arbeitsrate (Filter $F_1^2$ ... usw). Zur Herstellung solcher Filter, die der gleichen Familie angehören, wie beispielsweise die Filter $F_1$, $F_1^2$ und $F_1^4$, kann die gleiche Schaltungsstruktur verwendet werden, so daß diese Filterungen durch time-sharing-Betrieb eines Filters erzeugt werden können, sofern es schnell genug arbeitet. Es ist dabei lediglich nötig, für die Filterung $F_1^2$ die doppelte Zahl von Zeitschlitzen wie für das Filter $F_1$ vorzusehen und die vierfache Zahl von Zeitschlitzen für die Filterung $F_1^4$.

Das Schema selbst ist so aufbereitet, daß im untersten Frequenzbereich, d.h. im Frequenzbereich von 4 kHz bis 8kHz, das untere Seitenband stets selektiert, d.h. durchgelassen wird. Demzufolge braucht das Filter $F_0$ nicht arithmetisch symmetrisch zu sein. Wie in Abschnitt 2.2 unter Punkt d) erläutert, brauchen arithmetische symmetrische Filter nur die halbe Anzahl von Addieren und Multiplizierern. Jedoch, wenn die Filteranforderungen nicht symmetrisch sind, ist ein arithmetisches symmetrisches Filter, das solche Anforderungen erfüllt, im allgemeinen von einem höheren Grad und benötigt demzufolge mehr Verzögerungseinheiten. Da für diese ein time-sharing-Betrieb nicht möglich ist, können die Gesamtkosten trotz der Ersparnisse in den Rechnereinheiten dann größer sein.

Zu beachten ist auch beispielsweise ein Vergleich von $F_1$ und $\tilde{F}_1$. Wie aus den Fig. 2 und 4 ersichtlich ist, sind die Durchlaß- und Sperrbereiche für die Filter $F_1$ und $\tilde{F}_1$ gleich. Dies schließt jedoch nicht zwingend ein, daß die entsprechenden Filteranforderungen ebenfalls gleich sind. Tatsächlich ist nämlich die Sperrdämpfung von $\tilde{F}_1$ gleich der Echodämpfung von $F_1$ und umgekehrt. In der Praxis sind Echodämpfungsforderungen stets wesentlich niedriger als Betriebsdämpfungsforderungen (forward loss). Deshalb ist der Filtergrad, der die Anforderungen für $\tilde{F}_1$ erfüllt, wesentlich höher als der für $F_1$. Insbesondere wenn Wellendigitalfilter benutzt werden, wäre die Annahme, daß die Richtungsfilter zur Realisierung von $F_1$ und $\tilde{F}_1$ nur die Hälfte an Schaltungsstrukturen erfordern wie für die Realisierung der Filter $F_1$ in der Fig. 2, nicht richtig. Trotzdem wird sich sicherlich eine Ersparnis erzielen lassen.

Ein Filter, wie beispielsweise $\tilde{F}_2$, das in den Fig. 3 und 4 dargestellt ist, ersetzt die zwei Filter $F_2$ in der Schaltung von Fig. 2. Die Filteranforderungen sind arithmetisch symmetrisch bezüglich einem Viertel der Arbeitsrate. Demzufolge kann das Filter $\tilde{F}_2$ mit einer beträchtlichen Ersparnis hinsichtlich der Zahl der Addierer und Multiplizierer realisiert werden, ähnlich dem, was bereits in Abschnitt 2.3 d) diskutiert wurde. Andererseits ist $\tilde{F}_2$ ein Bandpaßfilter während $F_2$ ein Tiefpaßfilter ist und die Übergangsbereiche von $\tilde{F}$ sind nur halb so breit.

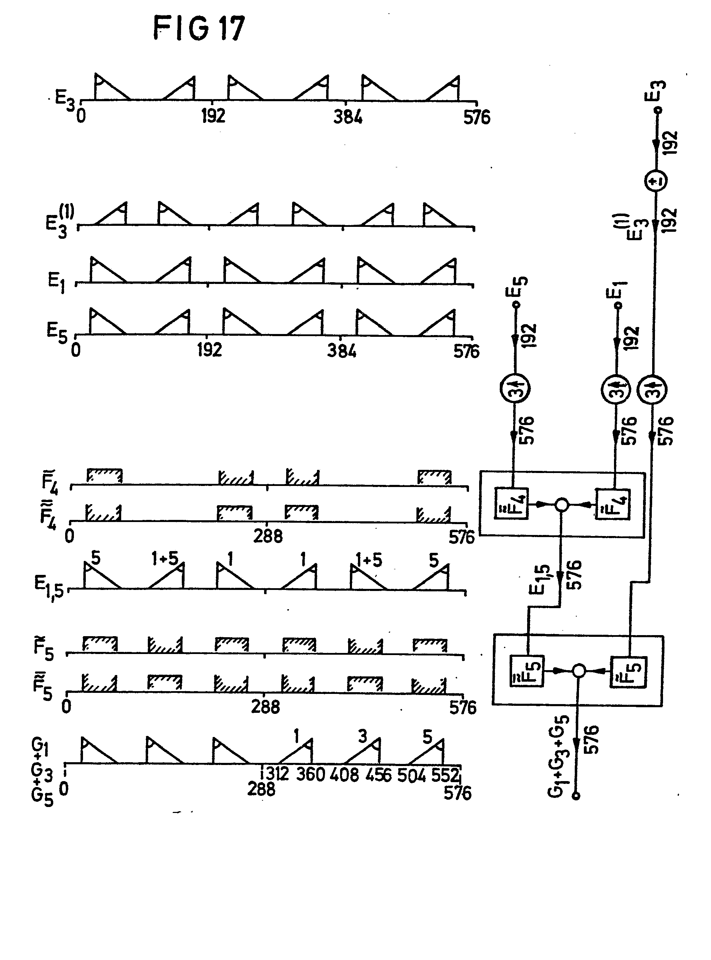

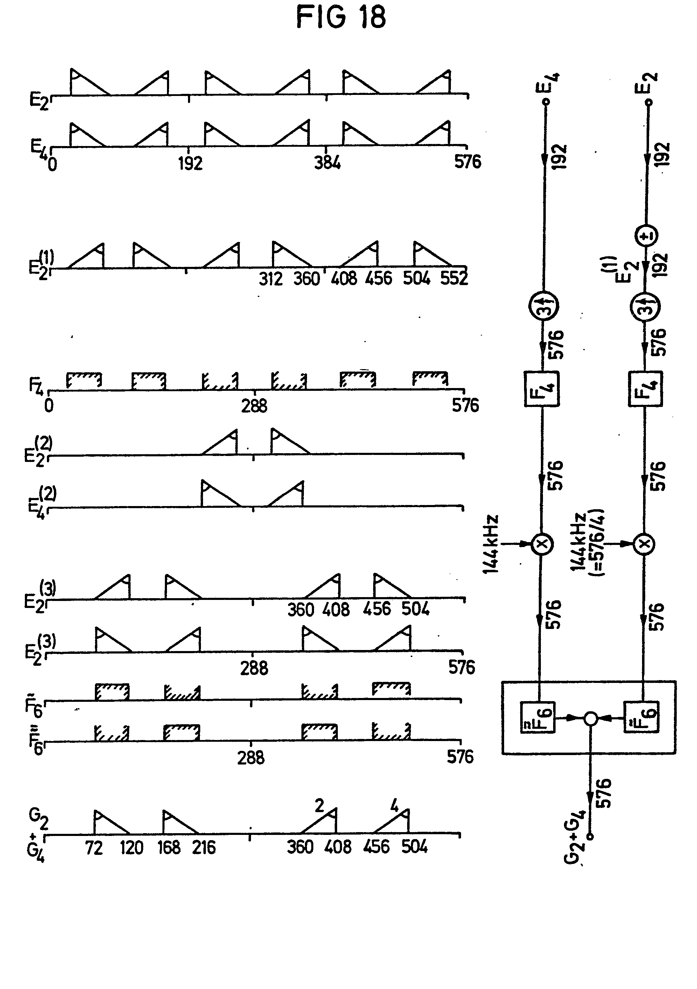

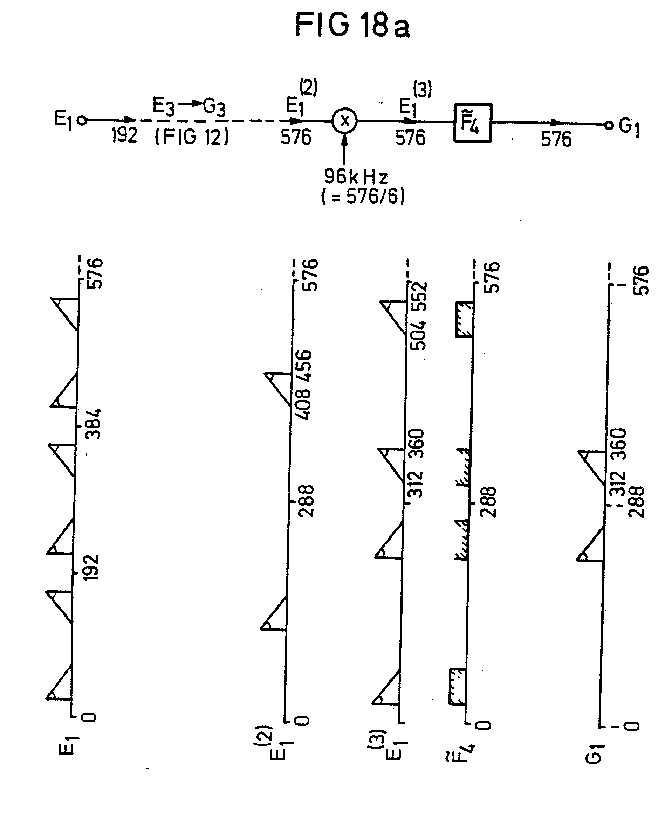

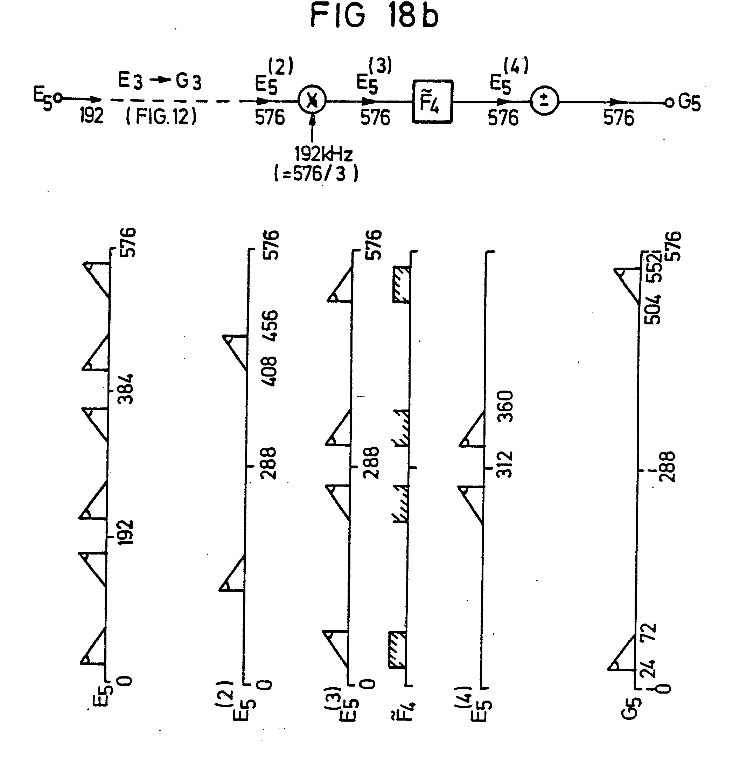

In Fig. 16 ist gezeigt, wie die fünf Gruppen $G_1$ bis $G_5$ zusammenzusetzen sind, um die Grund-Sekundärgruppe SG zu erhalten. Dieses Schema muß, ohne daß es hierfür einer Erläuterung bedürfte, entsprechend abgewandelt werden, wenn die Anordnungen nach den Fig. 17 und 18 zur Erzeugung von $G_1$ bis $G_5$ herangezogen werden.

### 3.3 12-Kanal-System

Eine erste Methode zur Erzeugung eines 12-Kanal-Systems ist in der Verwendung des in Abschnitt 3.2 diskutierten Schemas zu sehen, jedoch begrenzt auf die Erzeugung von $E_1$. Man kommt in diesem Fall auf eine verhältnismäßig hohe Arbeitsrate, nämlich auf eine Abtastfrequenz von 192 kHz.

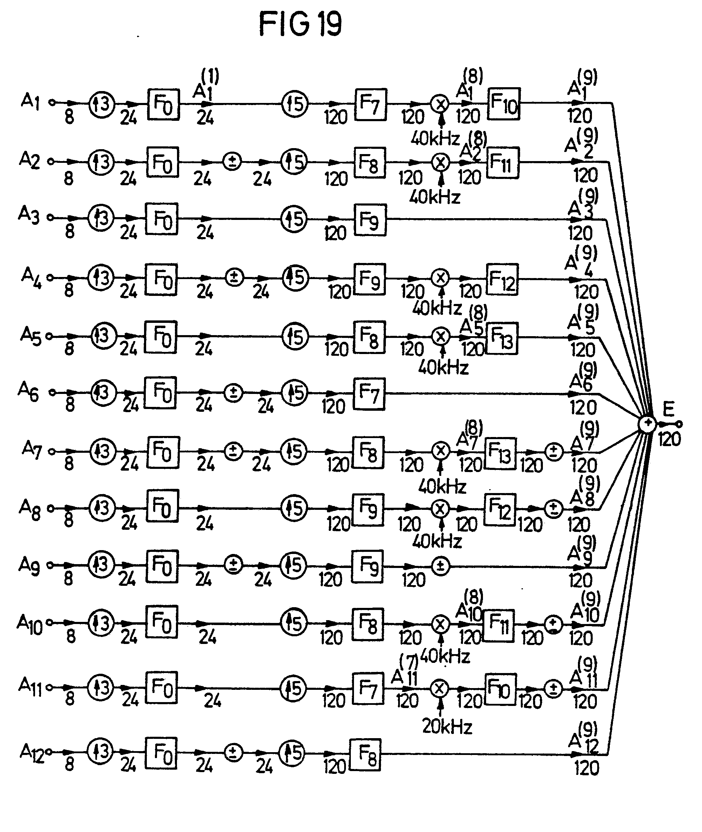

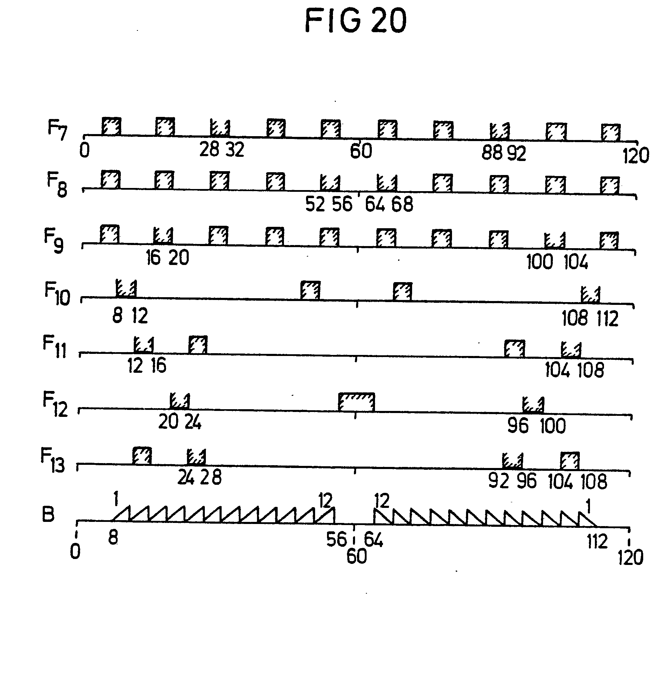

Geht man jedoch von einer ursprünglichen Abtastrate von 24 kHz aus, dann ist es möglich, wie in Abschnitt 2.4 erwähnt, die 12-Kanal-Gruppe mit der niedrigstmöglichen endgültigen Abtastrate von 120 kHz zu erzeugen und zugleich auch die Forderung zu beachten, daß die Modulatoren nur Multiplikationen mit den Werten +1, −1 und 0 auszuführen haben. Es erscheint nicht erforderlich, dies im einzelnen zu diskutieren, da dies für das Beispiel eines 60-Kanal-Systems bereits ausführlich dargestellt wurde. So ist in Fig. 19 des Blockschaltbild für eine mögliche Lösung dargestellt. Das Filter $F_0$ ist natürlich das gleiche wie in Fig. 2. In Fig. 20 sind einersets die Frequenzbereiche angegeben, für die die Durchlaßbereichs- und Sperrbereichs-Forderungen für die Filter $F_7$ bis $F_{13}$ festgelegt werden müssen, und andererseits ist auch die Spektralverteilung für die endgültige 12-Kanal-Gruppe E dargestellt.

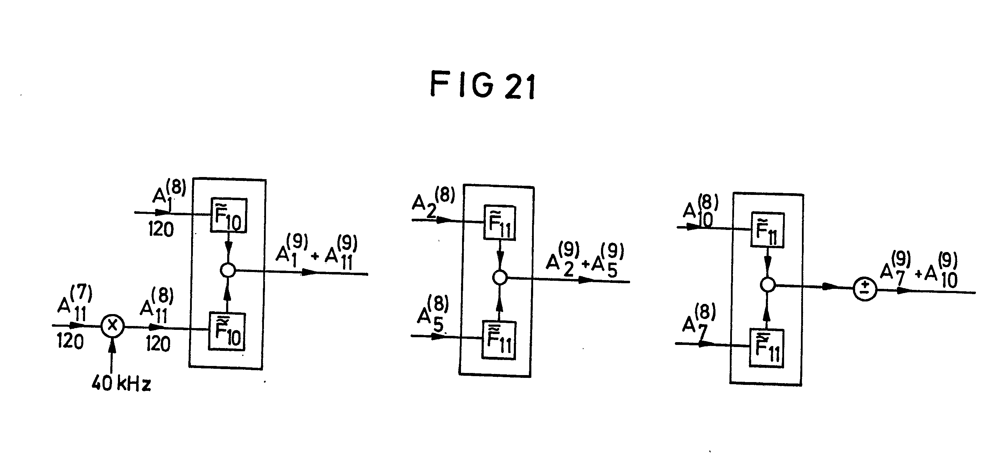

Auch für das Schema von Fig. 19 lassen sich eine Reihe anderer Lösungsmöglichkeiten angeben. Von besonderem Interesse sind dabei wiederum jene, bei denen von Richtungsfiltern Gebrauch gemacht werden kann. Entsprechende Modifikationen, die dabei auf die Schaltung von Fig. 19 angewendet werden müssen, sind in Fig. 21 dargestellt, die Filter $\tilde{F}_{10}$ und $\tilde{F}_{11}$ haben entsprechend dieselben Durchlaß- und Sperrbereiche wie die Filter $F_{10}$ und $F_{11}$. Die Signale $A_1^{(9)} + A_{11}^{(9)}$, $A_2^{(9)} + A_5^{(9)}$ und $A_7^{(9)} + A_{10}^{(9)}$ können so durch die Verwendung von Wellendigital-Richtungsfilter erzeugt werden, während die Signale $A_3^{(9)}$, $A_4^{(9)}$, $A_6^{(9)}$, $A_8^{(9)}$, $A_9^{(9)}$ und $A_{12}^{(9)}$ in der gleichen Weise wie vorher erzeugt werden. Alle diese Signale müssen dann wiederum addiert werden, um die Gruppe E zu bilden.

### 3.4 Außerband-Signalisierung und Pilotfrequenzen

Wenn ein FDM-System mit einer Außerband-Signalisierung versehen werden soll, muß bekanntlich ein Signalton von 3850 Hz (bzw. 3825 Hz) in einer passenden Weise eingeführt werden. Für die in den Abschnitten 3.2 und 3.3 beschriebenen Schemas erfordert dies die Einführung eines Tones von 4150 Hz (oder 4175 Hz) unmittelbar nach dem Filter $F_0$. Es sollte also dieses Filter dann einen Dämpfungspol in der Umgebung von dieser Frequenz haben; dies ist zu fordern im Fall der PCM/FDM-Umwandlung, aber im Fall der Audio/FDM-Umwandlung ist es nicht zwingend erforderlich, einen entsprechenden Dämpfungspol bei dem Analogfilter vorzusehen, das der Eingangsabtastung vorhergeht.

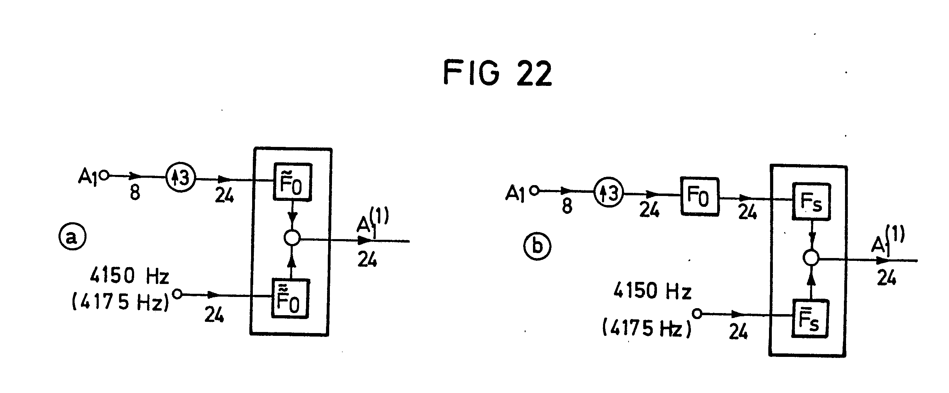

Wenn der Bandpaß mit dem niedrigsten Durchlaßbereich (4 bis 8 kHz) ein Wellendigitalfilter ist, lassen sich Vereinfachungen wiederum dann erzielen, wenn es als Richtungsfilter verwendet wird. Wenn also das Filter $F_0$ so zum Filter $\tilde{F}_0$ modifiziert wird, daß auch $\tilde{F}_0$ den vorerwähnten Dämpfungspol hat, ist seine komplementäre Eingangsklemme geeignet, um den Signalisierungston einzufügen, da eine gewisse Filterwirkung dann automatisch gegeben ist. Die entsprechende Anordnung ist lediglich für

den Kanal $A_1$ in Fig. 22a gezeigt.

Eine andere Lösung, die offenbar besser als die eben beschriebene ist, besteht in der Einführung eines zusätzlichen Signalfilters $F_s$ unmittelbar nach dem Filter $F_o$. Wenn das Filter $F_s$ ein Wellendigitalfilter ist, wie dies in Fig. 22b dargestellt ist, läßt es sich wiederum als Richtungsfilter verwenden, das Bandpaß-Verhalten für den Signalpfad und das dazu komplementäre Bandsperren-Verhalten für den eigentlichen Übertragungsweg hat. In diesem Fall kann ein genau begrenzter Signalkanal in einfacher Weise realisiert werden.

Die vorstehend in Abschnitt 2.1 gegebenen Erläuterungen dahingehend, daß die gleichen Anordnungen für Sende- und Empfangsrichtungen verwendet werden können, haben auch für die eben besprochenen Signalisierungsschaltungen Gültigkeit. Schließlich lassen sich die eben besprochenen Möglichkeiten auch zur Einkopplung und zur Auskopplung von Pilotsignalen verwenden.

Es sei noch erwähnt, daß die in den Blockschaltbildern der Figuren verwendeten Bausteine wie Filter, Modulatoren, Anordnungen zur Erhöhung der Abtastrate, Summierschaltungen (+) und Vorzeicheninverter ($\pm$) für sich bekannt sind. Als Digitalfilter eignen sich insbesondere die bekannten Wellendigitalfilter, da sie auf Grund ihrer Konfiguration und ihres Schaltungsentwurfs unmittelbar aus äquivalenten LC-Schaltungen hergeleitet werden können und somit auch vollständig die Eigenschaften von LC-Schaltungen, insbesondere von äquivalenten LC-Abzweigschaltungen haben. Auch haben sie die Eigenschaften von Richtungsfiltern. Aufbau und Wirkungsweise von Wellendigitalfiltern sind beispielsweise aus den deutschen Patentschriften 20 27 303 und Nr. 22 63 087 bekannt. Als weitere Filterbausteine können ferner solche Filterschaltungen in Betracht kommen, die aus geschalteten Kapazitäten bestehen und die ebenfalls geeignet sind, aus Abtastproben bestehende Signale zu verarbeiten. Für diese Art von Filtern hat sich in der englischen Fachsprache der Ausdruck "switched-capacitor-filters" eingebürgert, worauf an sich im Vorstehenden schon hingewiesen wurde. Beispielsweise sind solche Filter in dem von G. Biorci herausgegebenen Buch "Network and Switching Theory" und dort auch in dem Abschnitt "Resonant Transfer Circuits" (S. 382—446) (Academic Press, New York, 1968) beschrieben.

Es ist weiter zu berücksichtigen, daß die Ausführungsbeispiele vor allem im Hinblick auf ihre Zahlenangaben abgestellt sind auf solche Systeme, bei denen das ursprüngliche Audio-Signal eine Bandbreite von etwa 4 kHz hat, d.h. also dem Raster der derzeit üblichen Aufbereitung von FDM-Systemen entsprechen. Wenn die angegebenen Schaltungen in Systemen eingesetzt werden sollen, für die eine andere Kanalbreite vorgesehen ist, dann müssen die Zahlen hinsichtlich Grundarbeitsrate entsprechend den angegebenen Multiplikationsfaktoren geändert werden.

Es ist auch erkennbar, daß in den Ausführungsbeispielen gerade das Filter $F_o$ das eigentliche Kanalfilter darstellt und somit dasjenige Filter, an das die schärfsten Anforderungen in allen Übertragungssystemen zu stellen sind. Gerade für dieses Filter wird aber die digitale Realisierung so vorgesehen, daß es bei der im System kleinstmöglichen Abtastrate arbeitet, wodurch auch der schaltungstechnische Aufwand am niedrigsten gehalten werden kann, was auch für eine integrierte Herstellung solcher Filter von Bedeutung ist. Zum leichteren Verständnis sei noch auf die an sich bekannte Tatsache hingewiesen, daß Abtastproben verarbeitende Filter, wie beispielsweise Digitalfilter, ein Sperr- bzw. Durchlaßverhalten, d.h. also allgemein eine Filtercharakteristik haben, die spiegelsymmetrisch zur Frequenz F/2 ist und periodisch mit der Frequenz F, wenn F die Arbeitsrate ist. Es entstehen deshalb weitere, an sich unerwünschte Durchlaßbereiche, deren Auftreten dort unerwünscht ist, wo diese Eigenschaft der Digitalfilter Störungen im Übertragungsverhalten des Gesamtsystems hervorrufen würde. Aus diesem Grund sind die in den einzelnen Übertragungswegen dem Filter $F_o$ nachgeschalteten Filter so ausgelegt, daß ihre Sperrbereiche die störenden Durchlaßbereiche des Filters $F_o$ abdecken, und es werden deshalb die Arbeitsraten jeweils schrittweise so erhöht, daß diese Forderung erfüllt werden kann. Gleichzeitig wird damit jeweils die Anzahl der gemeinsam zu selektierenden Sprachkanäle entsprechend erhöht.

In den Ausführungsbeispielen ist ferner die bei derzeitigen PCM-Systemen übliche Standard-Abtastrate von 8 kHz angenommen. Auch in dieser Hinsicht müssen die Zahlenwerte und die ihnen zugeordneten Faktoren dann geändert werden, wenn PCM-Systeme mit anderen Standard-Abtastraten zum Einsatz kommen sollen. Die hier angegebenen Verfahren und Schaltungen machen es auch jederzeit möglich, von den für trägerfrequente Übertragungssysteme vorgesehenen Frequenzbereichen bzw. den dazugehörigen Schaltungseinrichtungen unmittelbar auf PCM-Systeme bzw. deren zugehörigen Schaltungseinrichtungen überzugehen und umgekehrt, ohne daß die einzelnen Kanäle vom trägerfrequenten Übertragungsbereich in den Audio-Bereich abgebaut und im PCM-System zur Übertragung einer größeren Anzahl einzelner Kanäle wieder aufgebaut werden müßten. Schaltungen mit dieser Eigenschaft werden auch als Transmultiplexer bezeichnet.

Wie bereits erwähnt, sind in den Figuren, in denen dies von Bedeutung ist, die Frequenzpläne, die Spektralverteilung sowie die Frequenzlage der Filter-Sperr- und -Durchlaßbereiche zur besseren Übersicht unmittelbar angegeben. Die Signallagen stimmen dabei unmittelbar mit dem mitgezeichneten Signalflußdiagramm überein. Aus diesem Grund wird zur vereinfachten Darstellung ausdrücklich auf die beigefügten Figuren hingewiesen, in denen detailliert alle relevanten Angaben bereits gemacht sind. Auch ist durch den Hinweis "in Fig. ..." unmittelbar zu entnehmen, in welcher vorangehenden Figur dieser Schaltungsabschnitt vorhanden ist.

Im einzelnen läßt Fig. 2 erkennen, wie als Beispiel zwei Kanäle (vgl. Fig. 1) zusammengefaßt werden können. Ausgehend von einer Arbeitsrate von 8 kHz wird die Arbeitsrate für beide Kanäle um den Faktor 3 auf 24 kHz erhöht. Es folgt anschließend für jeden Kanal das Filter $F_o$, im Anschluß daran wird für den Kanal $A_2$ für jede zweite Abtastprobe das Vorzeichen invertiert und anschließend für beide Kanäle die Arbeitsrate um den Faktor 2 auf 48 kHz erhöht. Es schließen sich daran an die Filter $F_1$, denen die Modulatoren mit 16 kHz (=48/3) Modulationsfrequenz folgen. Im Anschluß daran sind die Filter $F_2$ geschaltet und es wird vor der Zusammenfassung der Kanäle in der Additionsschaltung "+" zur 2-Kanal-Untergruppe $B_1$ für den Kanal $A_1$ das Vorzeichen jeder zweiten Abtastprobe invertiert ($\pm$).

Der Durchlaßbereich der Filter $F_o$ liegt zwischen 4 kHz und 8 kHz, die Filter $F_1$ und $F_2$ sind so bemessen, daß einerseits die störenden Durchlaßbereiche des Filters $F_o$ durch die Sperrdämpfung der Filter $F_1$ und $F_2$ abgedeckt werden, und zugleich ist auch hinsichtlich der Vorzeicheninvertierung darauf geachtet, daß die Kanäle $A_1^{(1)}$, $A_2^{(1)}$ bei der Zusammensetzung zum Kanal $B_1$ in der richtigen Lage ankommen, also zwischen 8 kHz und 16 kHz in Kehrlage und zwischen 32 kHz und 40 kHz in Normallage.

Die Schaltung von Fig. 3 ist wirkungsgleich mit der von Fig. 2. Es wird dort allerdings die Modulation mit 16 kHz erst nach der Zusammenfassung vorgenommen und das Filter $\tilde{F}_2$ nachgeschaltet. Dies gilt auch für die Schaltung nach Fig. 4, bei der bei Erreichen der Arbeitsrate von 48 kHz das aus den Filtern $\tilde{F}_1$ und $\tilde{\tilde{F}}_1$ bestehende Richtungsfilter vorgesehen ist, an dessen Ausgang der Modulator angeschaltet ist.

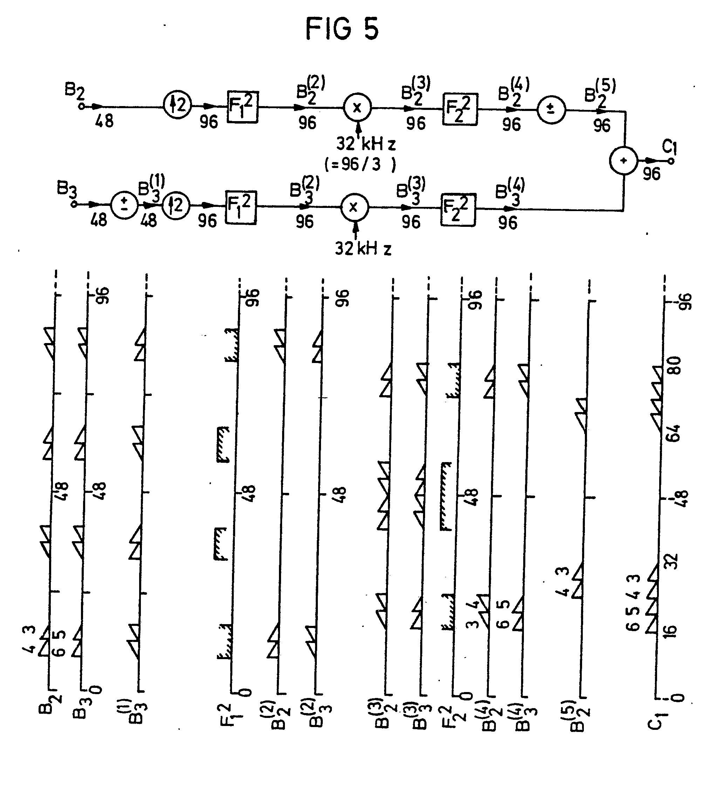

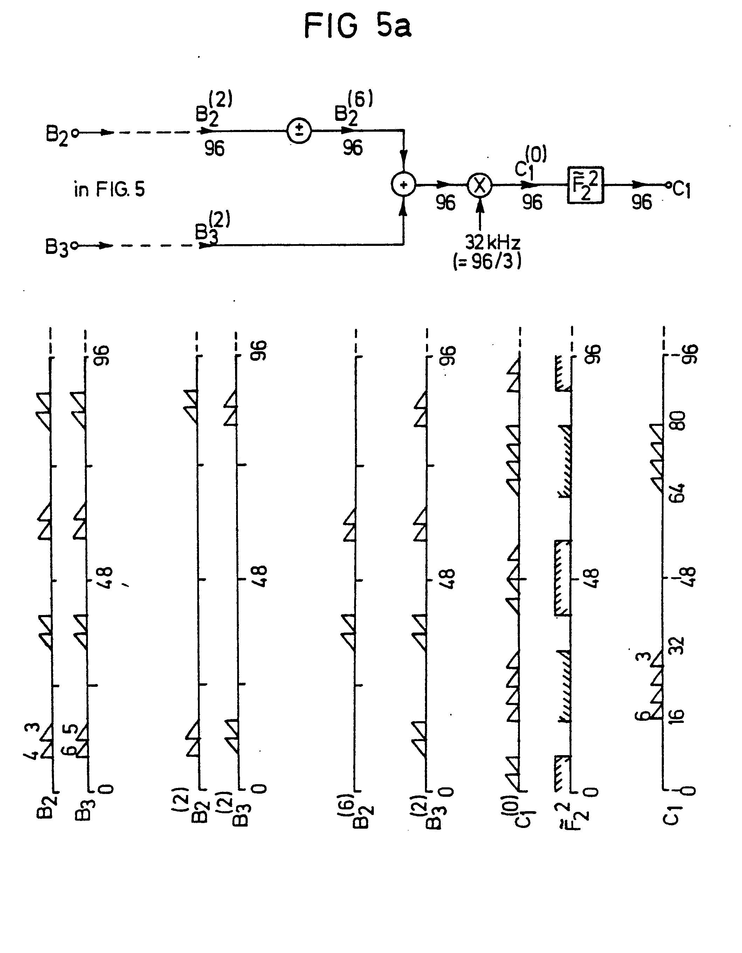

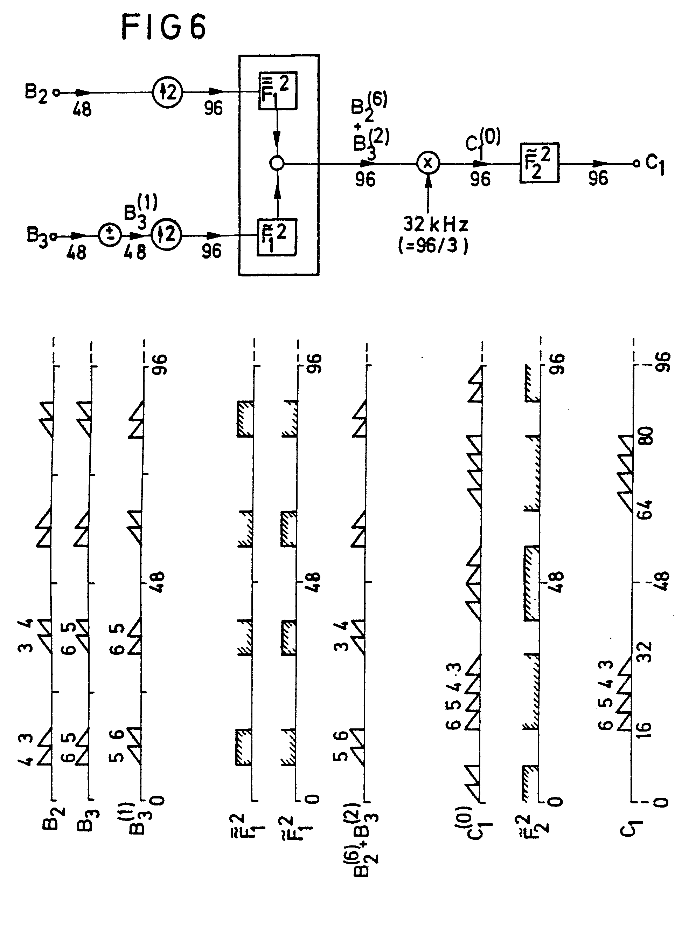

In den Fig. 5, 5a und 6 sind Schaltungen zur Erzeugung von 4-Kanal-Untergruppen aus zwei 2-Kanal-Untergruppen gezeigt. Als Beispiel sind die beiden 2-Kanal-Untergruppen $B_2$ und $B_3$ (vgl. Fig. 1) gewählt, die in der Additionsschaltung (+) zur 4-Kanal-Untergruppe $C_1$ zusammengefaßt werden. Für beide Kanäle wird die Arbeitsrate um den Faktor 2 zunächst von 48 kHz auf 96 kHz erhöht, so daß sich dort entsprechend den früheren Ausführungen die Filter $R_1^2$ anschließen. Im Kanal $B_3$ erfolgt bereits am Eingang eine Vorzeicheninvertierung ($\pm$). Den Filtern $F_1^2$ ist jeweils ein Modulator mit 32 kHz (= 96/3) Modulationsfrequenz nachgeschaltet. Es schließen sich dann an die Filter $F_2^2$ und für den Kanal $B_2$ eine Vorzeicheninvertierung.

Entsprechend den Spektral- und Frequenzplänen liegen also die Kanäle 4, 3 der 2-Kanal-Untergruppe $B_2$ und die Kanäle 6, 5 der 2-Kanal-Untergruppe $B_3$ in der 4-Kanal-Untergruppe $C_1$ in Kehrlage zwischen den Frequenzen 16 kHz und 32 kHz, bzw. spiegelsymmetrisch zur Frequenz 48 kHz zwischen den Frequenzen 64 kHz und 80 kHz in Normallage. In Fig. 5a ist unmittelbar der Hinweis auf die vorangehende Schaltung "in Fig. 5" zu erkennen. Die Zusammenfassung von $B_2$ und $B_3$ erfolgt, nachdem für $B_2$ die Vorzeicheninvertierung durchgeführt ist. Nach der Zusammenfassung erfolgt die Modulation mit 32 kHz, so daß auch hier (vgl. Fig. 3) nur ein Modulator erforderlich ist. Dem Modulator nachgeschaltet ist das Filter $\tilde{F}_2^2$, an dessen Ausgang wiederum die 4-Kanal-Untergruppe $C_1$ bei der Arbeitsrate von 96 kHz erscheint. Im Ausführungsbeispiel von Fig. 6 wird für die 2-Kanal-Untergruppe $B_3$ zunächst die Vorzeicheninvertierung ($\pm$) durchgeführt, anschließend die Arbeitsrate für beide Kanäle $B_2$ und $B_3$ um den Faktor 2 auf 96 kHz erhöht und die Zusammenfassung erfolgt in einem Richtungsfilter mit zueinander komplementären Übertragungsfunktionen $\tilde{F}_1^2$ und $\tilde{\tilde{F}}_1^2$. Am Ausgang dieses Richtungsfilters liegt die gleiche Schaltung wie in Fig. 5a.

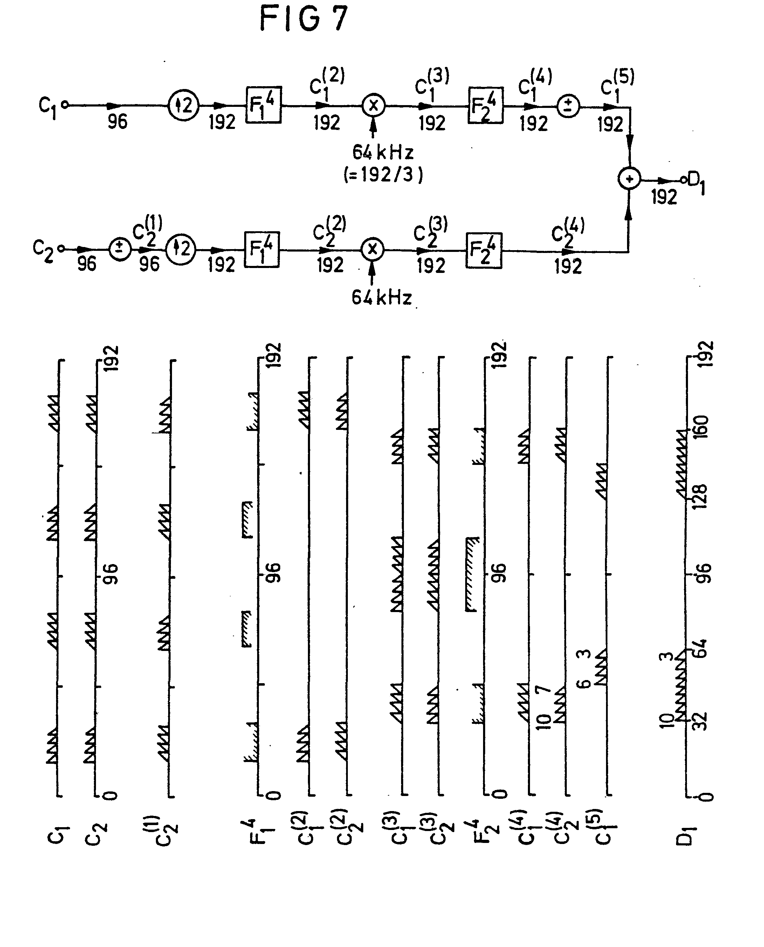

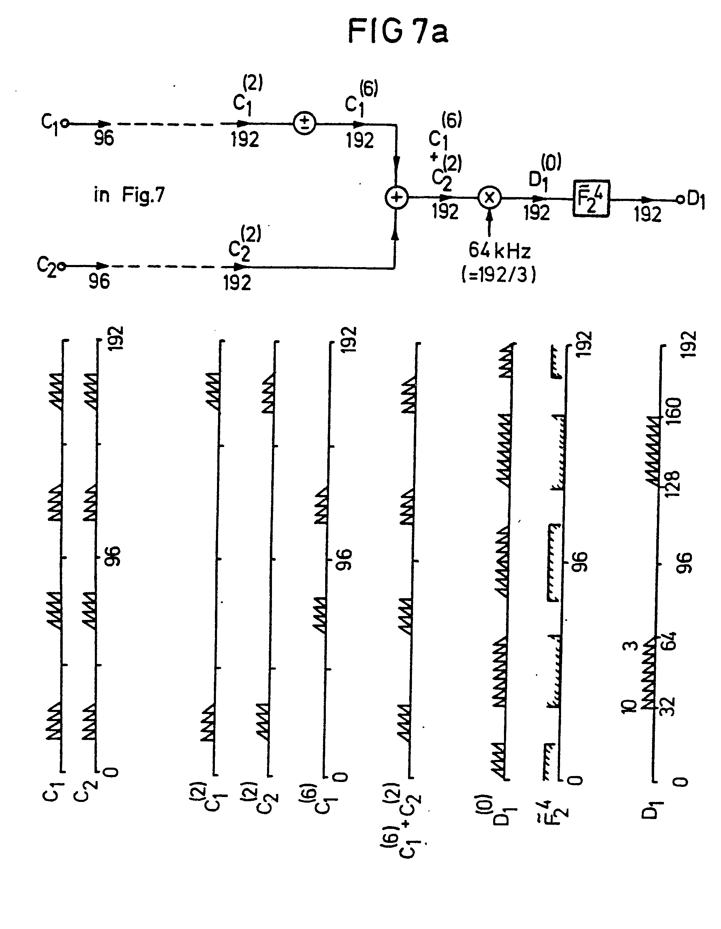

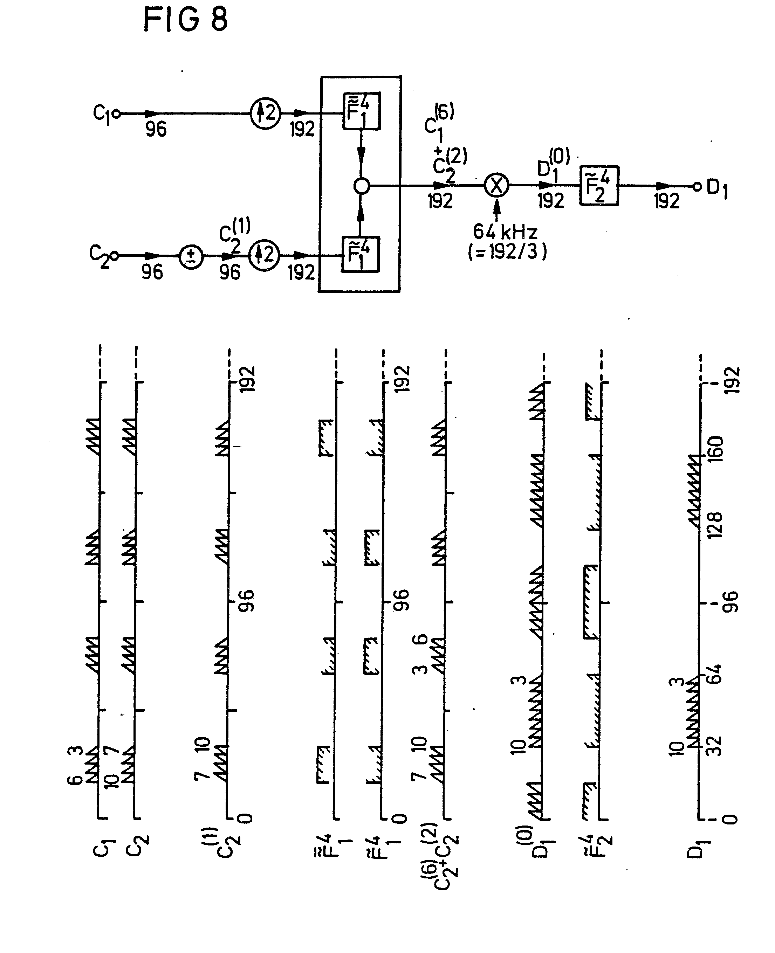

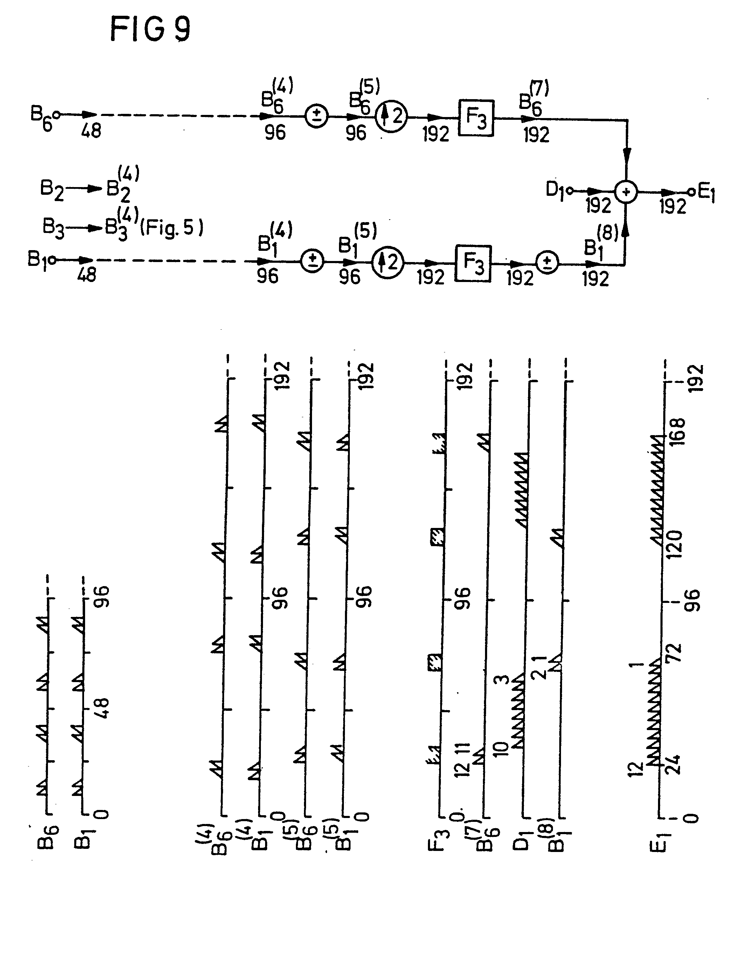

In den Fig. 7, 7a und 8 sind Ausführungsbeispiele zur Erzeugung der 8-Kanal-Untergruppen $D_1$ gezeigt, die nach der Zusammenfassung im Summierer (+) bei einer Arbeitsrate von 192 kHz erscheinen. In Fig. 7 wird dabei zunächst für $C_2$ die Vorzeicheninvertierung durchgeführt, anschließend die Arbeitsrate um den Faktor 2 auf 192 kHz erhöht, so daß demzufolge in beiden Kanälen die Filter $F_1^4$ nachfolgen. Es erfolgt anschließend eine Modulation mit der Modulationsfrequenz 64 kHz (= 192/3), der in beiden Kanälen die Filter $F_2^4$ nachgeschaltet sind. Für die 4-Kanal-Untergruppe $C_1$ erfolgt vor der Zusammenfassung noch eine Vorzeicheninvertierung. Es erscheinen somit die Kanäle 10 bis 3 für die 8-Kanal-Untergruppe $D_1$ spiegelsymmetrisch zur Frequenz 96 kHz zwischen den Frequenzen 32 kHz und 64 kHz in Kehrlage und zwischen den Frequenzen 128 kHz und 160 kHz in Normallage. Dies gilt auch für die Schaltung nach Fig. 7a, bei der die Vorzeicheninvertierung für den Kanal $C_1$ unmittelbar vor der Zusammenfassung erfolgt, und es werden anschließend $C_1$ und $C_2$ gemeinsam der Modulator mit der Modulationsfrequenz 64 kHz zugeführt. Dem Modulator ist das Filter $\tilde{F}_2^4$ nachgeschaltet. Die Fig. 8 läßt eine Schaltung erkennen, bei der zur Zusammenfassung ein Richtungsfilter mit den zueinander komplementären Übertragungsfunktionen $\tilde{F}_1^4$ und $\tilde{\tilde{F}}_1^4$ verwendet ist, an dessen Ausgang die gleiche Schaltung wie in Fig. 7a liegt. Für den Kanal $C_2$ wird dabei zunächst die Vorzeicheninvertierung durchgeführt und nach Erhöhung der Arbeitsrate um den Faktor 2 und 192 kHz wird $C_1$ dem Filter $\tilde{F}_1^4$ und $C_2$ dem Filter $\tilde{\tilde{F}}_1^4$ zugeführt.

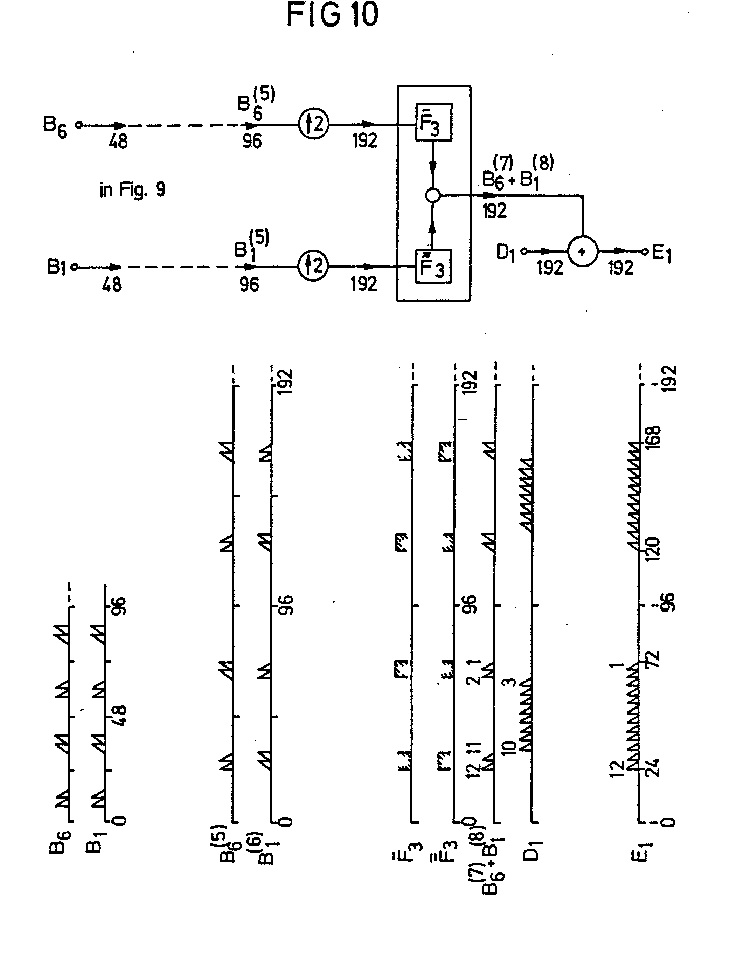

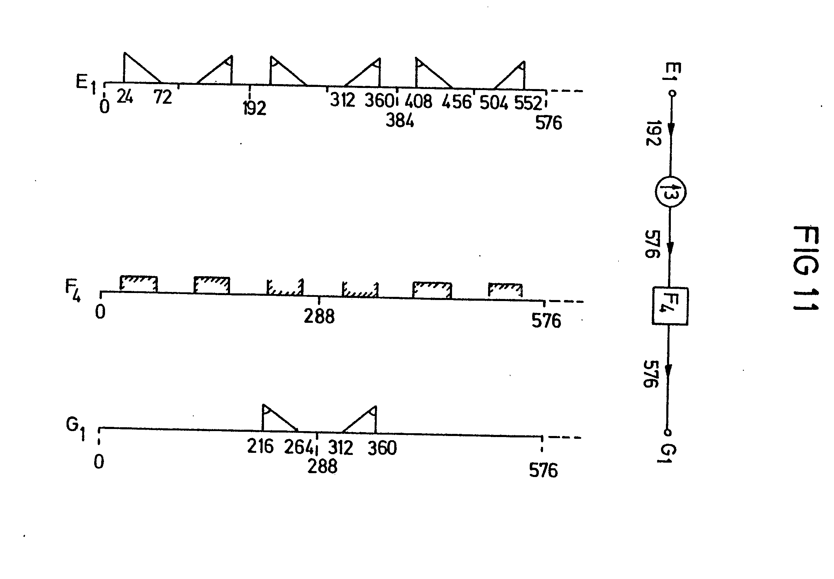

Mit den Schaltungen nach den Fig. 9 und 10 ist es möglich, die äußeren 2-Kanal-Untergruppen $B_1$ und $B_6$ (vgl. Fig. 1) zusammenzufassen. In Fig. 9 ist durch die gestrichelten Linien kenntlich gemacht, daß dort die gleichen Schaltungen verwendet werden wie in Fig. 5 zwischen den Schaltungspunkten $B_2$ und $B_2^{(4)}$ bzw. den Schaltungspunkten $B_3$ und $B_3^{(4)}$. Entsprechend sind diese Schaltungspunkte in Fig. 9 mit $B_6^{(4)}$ und $B_1^{(4)}$ bezeichnet. Für $B_1$ und $B_6$ wird zunächst eine Vorzeicheninvertierung ($\pm$) durchgeführt, anschließend die Arbeitsrate um den Faktor 2 auf 192 kHz erhöht und es schließen sich die Filter $F_3$ an. Für die 2-Kanal-Untergruppe $B_1$ wird vor der Zusammenfassung (+) das Vorzeichen invertiert. Wenn zusätzlich in die Additionsschaltung (+) die 8-Kanal-Untergruppe $D_1$ eingeführt wird, dann kann am Ausgang die 12-Kanal-Gruppe $E_1$ entnommen werden. Die Durchlaß- und Sperrbereiche des Filters $F_3$ liegen spiegelsymmetrisch zur Frequenz 96 kHz derart, daß $E_1$ zwischen 24 kHz und 72 kHz in Kehrlage und zwischen 120 kHz und 168 kHz in Normallage erscheint. In der Schaltung von Fig. 10 sind die beiden Filter $F_3$ durch ein Richtungsfilter mit zueinander komplementären Übertragungsfunktionen $\tilde{F}_3$ und $\tilde{\tilde{F}}_3$ ersetzt, so daß am Ausgang des nachgeschalteten Addierers (+) dann die vollständige 12-Kanal-Gruppe $E_1$ erscheint, wenn dem Addierer (+) zugleich die 8-Kanal-Untergruppe $D_1$ zugeführt wird.

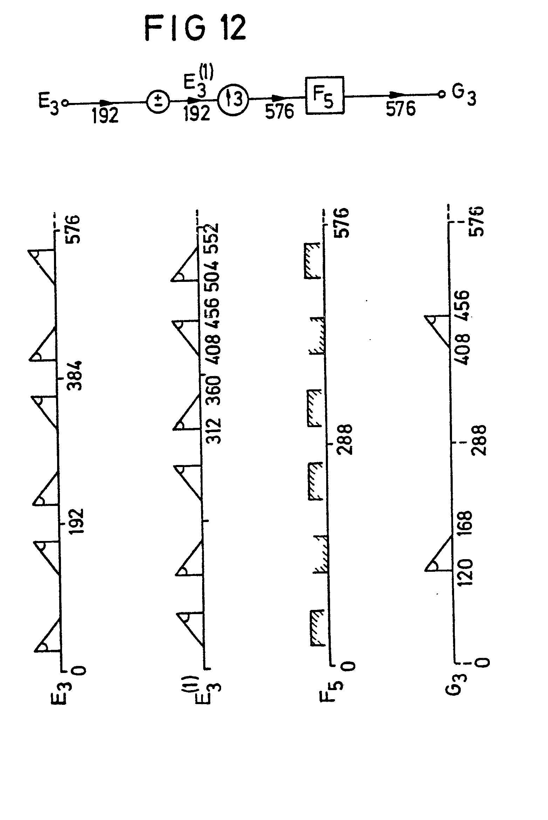

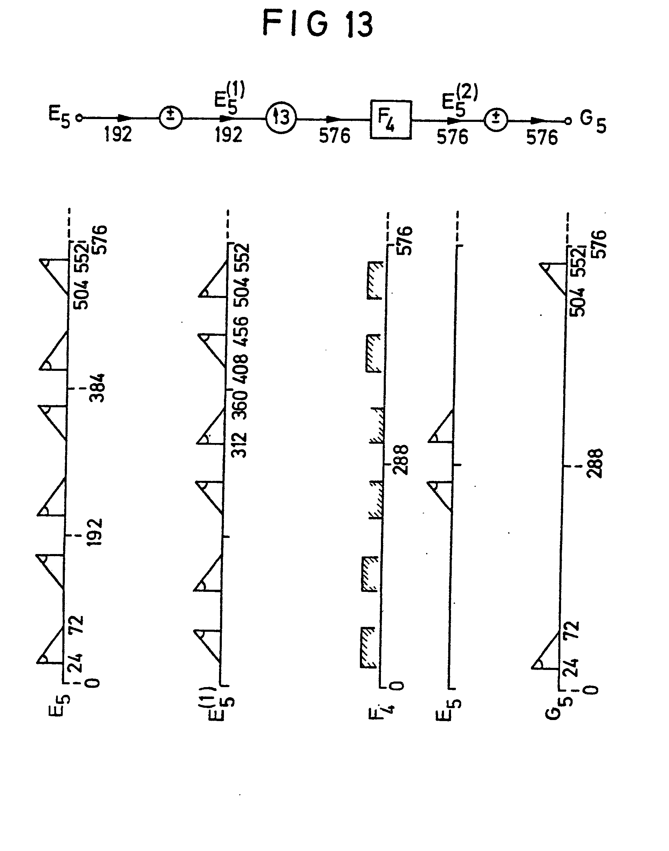

In den Fig. 11 bis 13 sind Modulationsanordnungen gezeigt, mit denen die 12-Kanal-Gruppen $E_1$ bzw. $E_3$ bzw. $E_5$ bei 192 kHz Arbeitsrate übergeführt werden können in die 12-Kanal-Gruppen $G_1$, $G_3$, $G_5$ bei der Arbeitsrate 576 kHz. In allen drei Fällen werden hierzu die Arbeitsraten um den Faktor 3 erhöht, in Fig. 11 unmittelbar vor dem Filter $F_4$, an dessen Ausgang bereits $G_1$ erscheint. In Fig. 12 ist eingangsseitig eine Vorzeicheninvertierung ($\pm$) vorgenommen und das Filter $F_5$ bei der Arbeitsrate 576 kHz vorgesehen, so daß am Ausgang $G_3$ erscheint. Fig. 13 enthält im Mittelteil die gleiche Schaltung wie Fig. 11, jedoch ist zusätzlich ein — und ausgangs — seitig eine Vorzeicheninvertierung ($\pm$) vorgesehen. Die Durchlaß- und Sperrbereiche der Filter $F_4$ und $F_5$ liegen symmetrisch zur Frequenz 288 kHz derart, daß $G_1$ zwischen 312 kHz und 360 kHz bzw. in Kehrlage zwischen 216 kHz und 264 kHz liegt, daß $G_3$ zwischen 408 kHz und 456 kHz bzw. 120 kHz und 168 kHz in Kehrlage und schließlich $G_5$ zwischen 504 kHz und 552 kHz bzw. zwischen 24 kHz und 72 kHz in Kehrlage erscheint.

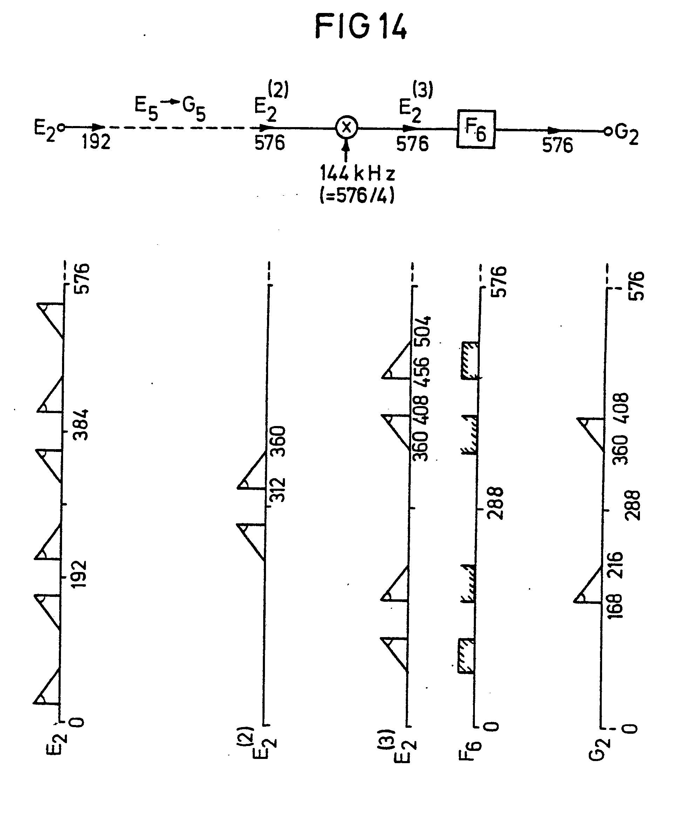

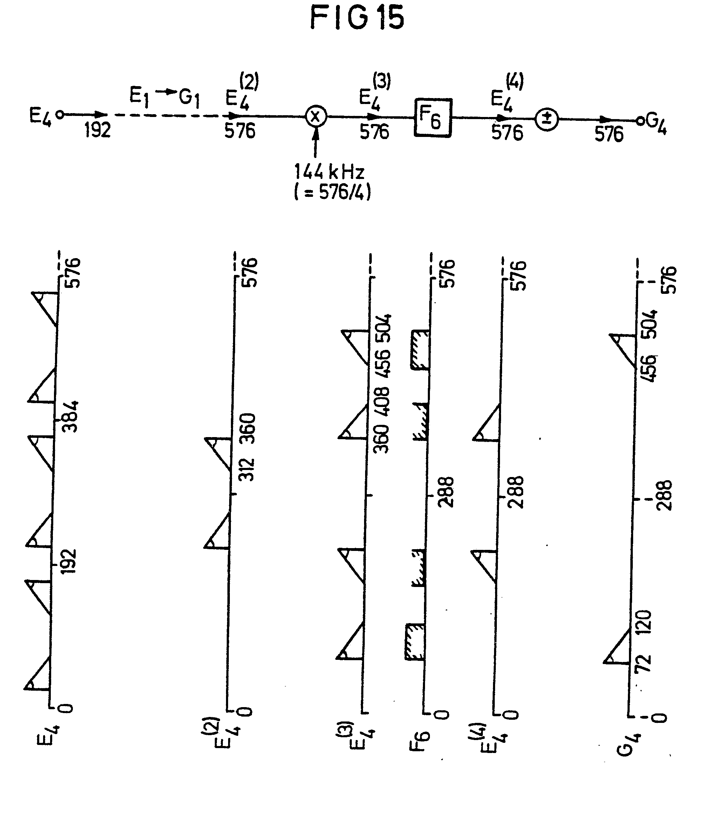

Bei Schaltungen nach den Fig. 14 und 15 werden die 12-Kanal-Gruppen $E_2$ bzw. $E_4$ übergeführt in die 12-Kanal-Gruppen $G_2$ bzw. $G_4$, für die ebenfalls die Arbeitsrate 576 kHz vorgesehen ist. Es sind hierzu die Modulatoren (x) mit der Modulationsfrequenz 144 kHz verwendet, denen die Filter $F_6$ nachgeschaltet

sind. In Fig. 14 bedeutet die gestrichelte Linie, daß dort der gleiche Schaltungsabschnitt wie zur Überführung von $E_5$ nach $G_5$ (Fig. 13) vorgesehen ist, während in Fig. 15 die gestrichelte Linie den gleichen Schaltungsabschnitt wie zur Überführung von $E_1$ nach $G_1$ gemäß Fig. 11 bedeutet. In Fig. 15 ist dem Filter $F_6$ noch eine weitere Invertierung ($\pm$) des Vorzwischens nachgeschaltet. Auch für das Filter $F_6$ liegt die Filtercharakteristik spiegel-symmetrisch zur Frequenz 288 kHz, so daß also die 12-Kanal-Gruppe $G_2$ in Normallage zwischen den Frequenzen 360 kHz und 408 kHz und in Kehrlage zwischen den Frequenzen 168 kHz und 216 kHz erscheint, während die 12-Kanal-Gruppe $G_4$ in Normallage zwischen den Frequenzen 456 kHz und 504 kHz und in Kehrlage zwischen den Frequenzen 72 kHz und 120 kHz erscheint.

Gemäß Fig. 16 entsteht also die Grund-Sekundär-Gruppe SG, wenn man die fünf 12-Kanal-Gruppen $G_1$ bis $G_5$ in einer Addierschaltung (+) zusammenfaßt, so daß die vollständige Grund-Sekundär-Gruppe-Frequenzlage zwischen 312 kHz und 552 kHz in Normallage bzw. zwischen 24 kHz und 264 kHz in Kehrlage erreicht wird.

Die Verwendung von Richtungsfiltern zur Erzeugung der 12-Kanal-Gruppen $G_1$ bis $G_5$ aus den 12-Kanal-Gruppen $E_1$ bis $E_5$ ist in den Fig. 17 und 18 gezeigt. In der Schaltung von Fig. 17 wird zunächst für $E_1$ und $E_5$ die Arbeitsrate um den Faktor 3 auf 576 kHz erhöht und anschließend $E_1$ dem Filter $\tilde{F}_4$ zugeführt, während $E_5$ dem Filter $\tilde{\tilde{F}}_4$ zugeführt wird. Die 12-Kanal-Gruppe $E_3$ wird im Vorzeichen invertiert ($\pm$) und nach Erhöhung der Arbeitsrate um den Faktor 3 dem Filter $\tilde{\tilde{F}}_5$ zugeführt. Das Ausgangssignal $E_{1.5}$ des ersten Richtungsfilters liegt am Eingang des Filters $\tilde{F}_5$, am Ausgang erscheinen $G_1 + G_3 + G_5$ in der anhand der Fig. 11 bis 13 bereits besprochenen Frequenzlage, so daß also dementsprechend auch die Filtercharakteristik der Richtungsfilter realisiert werden muß. In der Schaltung von Fig. 18 erfolgt für die 12-Kanal-Gruppe $E_2$ zunächst die Invertierung ($\pm$) des Vorzeichens. Es werden beide 12-Kanal-Gruppen $E_2$ und $E_4$ in der Arbeitsrate um den Faktor 3 erhöht und dem Filter $F_4$ (vgl. Fig. 11, 13) zugeführt, an dessen Ausgang die Modulatoren (x) mit einer Modulationsfrequenz von 144 kHz liegen. $E_2$ wird dem Filter $\tilde{F}_6$ und $E_4$ dem Filter $\tilde{\tilde{F}}_6$ zugeführt, so daß am Ausgang die beiden 12-Kanal-Gruppen $G_2$ und $G_4$ in der Frequenzlage gemäß den Fig. 14 und 15 erscheinen.

In den Fig. 18a und 18b sind noch weitere Möglichkeiten gezeigt, um $E_1$ in $G_1$ bzw. $E_5$ in $G_5$ überzuführen.

Hierzu ist das Filter $\tilde{F}_4$ (vgl. Fig. 17) verwendet, dem ein Modulator (x) mit der Modulationsfrequenz 96 kHz bzw. 192

vorgeschaltet ist (96 = 576/6; 192 = 576/3). In beiden Schaltungen ist durch die gestrichelten Linien der Schaltungsabschnitt zur Erzeugung von $G_3$ aus $E_3$ gem. Fig. 12 kenntlich gemacht. Für die Schaltung nach Fig. 18b muß dem Filter $F_4$ noch der Vorzeicheninvertierer ($\pm$) nachgeschaltet werden.

Der grundsätzliche Aufbau von Fig. 19 wurde vorstehend schon diskutiert. Es wird dabei die 12-Kanal-Gruppe E mit der Arbeitsrate 120 kHz durch die Summierung (+) der zunächst getrennt verarbeiteten Kanäle $A_1$ bis $A_{12}$ gewonnen. In allen Kanälen wird zunächst die Arbeitsrate von 8 kHz um den Faktor 3 auf 24 kHz gebracht und anschließend ist in jedem der Kanäle das Filter $F_0$ geschaltet, dessen Durchlaßbereich wiederum zwischen 4 kHz und 8 kHz liegt. Anschließend wird die Arbeitsrate um den Faktor 5 auf 120 kHz erhöht, wobei vorher für die Kanäle $A_2$, $A_4$, $A_6$, $A_7$, $A_9$ und $A_{12}$ eine Invertierung ($\pm$) des Vorzeichens jeder zweiten Abtastprobe vorgenommen wird. In den Kanälen $A_1$, $A_6$, $A_{11}$ folgen dann die Filter $F_7$, in den Kanälen $A_2$, $A_5$, $A_7$, $A_{10}$ und $A_{12}$ jeweils ein Filter $F_8$ und in den Kanälen $A_3$, $A_4$, $A_8$ und $A_9$ jeweils ein Filter $F_9$. Ein Modulator (x) mit der Modulationsfrequenz 40 kHz ist in den Kanälen $A_1$, $A_2$, $A_4$, $A_5$, $A_7$, $A_8$, $A_{10}$ nachgeschaltet und schließlich liegt für den Kanal $A_{11}$ nach dem Filter $F_7$ ein Modulator (x) mit der Modulationsfrequenz 20 kHz. Die Kanäle $A_3$, $A_6$ und $A_{12}$ werden nach Durchlaufen der Filter $F_9$ bzw. $F_7$ bzw. $F_8$ unmittelbar dem Addierer (+) zugeführt, während für den Kanal $A_9$ nach dem Filter $F_9$ eine Vorzeicheninvertierung ($\pm$) erfolgt. In den mit Modulatoren (x) versehenen Kanälen sind noch Filter nachgeschaltet, und zwar die Filter $F_{10}$ für die Kanäle $A_1$ und $A_{11}$, die Filter $F_{11}$ für die Kanäle $A_2$ und $A_{10}$, die Filter $F_{12}$ für die Kanäle $A_4$ und $A_8$ und die Filter $F_{13}$ für die Kanäle $A_5$ und $A_7$. Eine Invertierung ($\pm$) des Vorzeichens erfolgt anschließend noch für die Kanäle $A_7$, $A_8$, $A_{10}$ und $A_{11}$. Fig. 20 ist zu entnehmen, daß auch hier die Filter-Sperr- und Durchlaßbereiche für die Filter $F_7$ bis $F_{13}$ so gewählt sind, daß die zwölf einzelnen Kanäle spiegelsymmetrisch zur Frequenz 60 kHz zwischen den Frequenzen 8 kHz und 56 kHz in Normallage bzw. zwischen den Frequenzen 64 kHz und 112 kHz in Kehrlage erscheinen. Auf die mögliche Verwendung von Richtungsfiltern gem. Fig. 21 als Modifikationen für die Schaltung nach Fig. 19 wurde bereits hingewiesen und auch darauf, daß die dort verwendeten Filter $\tilde{F}_{10}$ und $\tilde{F}_{11}$ entsprechend dieselben Durchlaß- und Sperrbereiche wie die Filter $F_{10}$ und $F_{11}$ haben. Bei der in Fig. 21 gezeigten ersten Möglichkeit wird der Kanal $A_1$ dem Filter $\tilde{F}_{10}$ und der Kanal $A_{11}$ dem Filter $\tilde{\tilde{F}}_{10}$ zugeführt, so daß am Ausgang die Summe der beiden Kanäle abgenommen werden kann. Für den Kanal $A_{11}$ ist eingangsseitig noch ein Modulator (x) mit der Modulationsfrequenz 40 kHz vorgeschaltet. Bei dem in Fig. 21 ebenfalls dargestellten Ausführungsbeispiel werden die Kanäle $A_2$ und $A_5$ dem Richtungsfilter $\tilde{F}_{11}$ und $\tilde{\tilde{F}}_{11}$ zugeführt und können ausgangsseitig als $A_2+A_5$ abgenommen werden. Die dritte dargestellte Möglichkeit zeigt die Zusammenfassung der Kanäle $A_{10}$ und $A_7$ im Richtungsfilter $\tilde{F}_{11}$, $\tilde{\tilde{F}}_{11}$, wobei dem Ausgang eine Vorzeicheninvertierung ($\pm$) nachgeschaltet ist. Auch die in Fig. 21 verwendeten Richtungsfilter realisieren komplementäre Übertragungsfunktionen.

Die Schaltungen nach den Fig. 22a und 22b wurden im wesentlichen bereits erläutert. In beiden Fällen wird der Signalton 4150 Hz (4175 Hz) unmittelbar bei der Arbeitsrate 24 kHz den zugehörigen Filtern $\tilde{F}_0$ bzw. $\tilde{F}_s$ zugeführt. Der Kanal $A_1$ wird nach Erhöhung der Arbeitsrate um den Faktor 3 auf 24 kHz bei der Schaltung nach Fig. 22a unmittelbar an den Eingang des Filters $\tilde{F}_0$ und in der Schaltung von Fig. 22b über das Filter $F_0$ an den Eingang des Signalfilters $F_s$ gegeben, so daß am Ausgang der Kanal entsprechend der Stelle $A_1^{(1)}$ erscheint.

## Patentansprüche

Frequenzmultiplexsystems (Audio/FDM-Umsetzung) bzw. zur Frequenzumsetzung von pulscodierten Signalen in Signale eines Frequenzmultiplexsystems (PCM/FDM-Umsetzung) und umgekehrt, bei dem die ursprünglichen Signale in einer hinsichtlich der Frequenzbandbreite begrenzten Kanalbreite vorliegen, dadurch gekennzeichnet, daß zur Erzeugung von Abtastproben im Fall der Audio/FDM-Umsetzung und umgekehrt bzw. zur PCM/FDM-Umsetzung und umgekehrt als Grundarbeitsrate eine Arbeitsrate verwendet wird, deren Frequenzlage beim sechsfachen Wert der Kanalbreite liegt, und daß alle weiteren im Umsetzverfahren verwendeten Arbeitsraten ganzzahlige Vielfache der Grundarbeitsrate sind.

2. Verfahren nach Anspruch 1, dadurch gekennzeichnet, daß für PCM/FDM- bzw. umgekehrt für FDM/PCM-Umwandlungen alle Arbeitsraten ganzzahlige Vielfache der im PCM-System verwendeten Grund-PCM-Abtastrate (z.B. 8 kHz) sind.

3. Verfahren nach einem der vorhergehenden Ansprüche, dadurch gekennzeichnet, daß für Systeme mit Übertragungsbandbreiten von 4 kHz als Grundarbeitsrate eine Abtastfrequenz von 24 kHz verwendet wird bzw. von ganzzahligen Vielfachen diese Frequenz für weitere Umwandlungen in höhere Frequenzlagen.

4. Verfahren nach einem der vorhergehenden Ansprüche, dadurch gekennzeichnet, daß bei einer Kanalbreite von 4 kHz und einer Grund-PCM-Abtastrate von 8 kHz zur Bildung einer 60-Kanal-Sekundärgruppe (SG) von zunächst 12 einzelnen Kanälen ($A_1$ bis $A_{12}$) mit der Abtastrate 8 kHz im Fall der PCM/FDM-Umwandlung bzw. 24 kHz im Fall der Audio/FDM-Umwandlung je zwei Kanäle ($A_1$, $A_2$; $A_3$, $A_4$; ... $A_{11}$, $A_{12}$) zu sechs 2-Kanal-Untergruppen ($B_1$ bis $B_6$) zusammengefaßt werden und für diese ($B_1$ bis $B_6$) eine Arbeitsrate von 48 kHz vorgesehen wird, daß vier von diesen 2-Kanal-Untergruppen (z.B. $B_2$ bis $B_5$) zu zwei 4-Kanal-Untergruppen ($C_1$, $C_2$) bei einer Arbeitsrate von 96 kHz zusammengefaßt werden und aus diesen beiden bei einer Arbeitsrate von 192 kHz eine 8-Kanal-Untergruppe ($D_1$) gebildet wird, die mit den restlichen beiden 2-Kanal-Untergruppen (z.B. $B_1$ und $B_6$) zu einer 12-Kanal-Gruppe ($E_1$) bei einer Arbeitsrate von 192 kHz zusammengefaßt wird, und daß fünf solcher 12-Kanal-Gruppen ($E_1$ bis $E_5$), für die jeweils eine Arbeitsrate von 192 kHz vorgesehen ist, individuell moduliert und/oder gefiltert und fünf Bänder ($G_1$ bis $G_5$) bei einer Arbeitsrate von 576 kHz erzeugt werden, die anschließend zu einer Sekundärgruppe (SG) bei einer Arbeitsrate von 576 kHz zusammengefaßt werden (Fig. 1).

5. Verfahren nach Anspruch 4, dadurch gekennzeichnet, daß anstelle der individuellen Bildung (Fig. 11 bis 16) der einzelnen Bänder ($G_1$ bis $G_5$) drei dieser Bänder (z.B. $G_1$, $G_3$, $G_5$) gemeinsam aus den ihnen zugeordneten 12-Kanal-Gruppen ($E_1$, $E_3$, $E_5$) und die beiden weiteren Bänder ($G_2$, $G_4$) gemeinsam aus den ihnen zugeordneten beiden restlichen 12-Kanal-Gruppen ($E_2$, $E_4$) gebildet (Fig. 17 und 18) und die daraus entstehenden Ergebnisse zur Sekundärgruppe (SG) zusammengefaßt werden.

6. Verfahren nach einem der Ansprüche 1 bis 3, dadurch gekennzeichnet, daß bei einer Kanalbreite von 4 kHz und einer Grund-PCM-Abtastrate von 8 kHz zur Bildung einer 12-Kanal-Gruppe (E) für zwölf mit der Abtastrate 8 kHz betriebene Kanäle ($A_1$ bis $A_{12}$) die Arbeitsrate um den Faktor 3 (↑3) auf 24 kHz erhöht wird, daß jeder Kanal, gegebenenfalls in time-sharing-Verfahren, ein gleichartiges Filter ($F_o$) durchläuft und anschließend für einige Kanäle (z.B. $A_2$, $A_4$, $A_6$, $A_7$, $A_9$, $A_{12}$) jede zweite Abtastprobe im Vorzeichen invertiert (±) wird, daß anschließend für alle Kanäle die Arbeitsrate um den Faktor 5 auf 120 kHz erhöht und die einzelnen Kanäle gegebenenfalls nach Durchlaufen von Modulatoren und Filtern bei einer Arbeitsrate von 120 kHz zur 12-Kanal-Gruppe summiert (+) werden (Fig. 19).

7. Schaltungsanordnung zur Durchführung des Verfahrens nach einem der vorhergehenden Ansprüche, dadurch gekennzeichnet, daß zur Bildung einer 2-Kanal-Untergruppe (z.B. $B_1$ bzw. $B_2$ bis $B_6$) für die beiden Kanäle ($A_1$, $A_2$) die Arbeitsrate um den Faktor 3 auf 24 kHz erhöht ist, daß in beiden Kanälen jeweils ein Filter ($F_o$) vorgesehen ist, dessen Durchlaßbereich zwischen 4 kHz und 8 kHz liegt, daß einer der beiden Kanäle (z.B. $A_2$) eine Schaltung (±) durchläuft, die das Vorzeichen jeder zweiten Abtastprobe invertiert, und anschließend in beiden Kanälen die Arbeitsrate um den Faktor 2 auf 48 kHz erhöht ist, daß anschließend in beiden Kanälen weitere untereinander gleiche Filter ($F_1$, $F_2$) unter Zwischenschaltung eines Modulators (x) mit 16 kHz Modulationsfrequenz vorgesehen sind, daß in dem Kanal ($A_1$), für den das Vorzeichen für die zweite Abtastprobe nicht invertiert ist, dem Filter ($F_2$) eine weitere Schaltung zur Invertierung des Vorzeichens für jeweils jede zweite Abtastprobe (±) nachgeschaltet ist und anschließend beide Kanäle einer Summierschaltung (+) bei einer Arbeitsrate von 48 kHz zugeführt werden (Fig. 2).

8. Schaltungsanordnung nach Anspruch 7, dadurch gekennzeichnet, daß die jeweils dem ersten der weiteren Filter ($F_1$) nachgeschalteten Schaltungsabschnitte ersetzt sind durch einen Schaltungsabschnitt, bei dem im ersten Kanal ($A_1$) jede zweite Abtastprobe im Vorzeichen invertiert (±) wird, daß beide Kanäle anschließend zusammengefaßt (+) sind und nach Modulation (x) mit einer Frequenz von 16 kHz ein Filter ($\widetilde{F}_2$) durchlaufen (Fig. 3).

9. Schaltungsanordnung nach Anspruch 7, dadurch gekennzeichnet, daß der jeweils mit dem ersten der weiteren Filter ($F_1$) beginnende Schaltungsabschnitt ersetzt ist durch eine Richtungsfilter ($\widetilde{F}_1$, $\overline{F}_1$) mit komplementären Übertragungsfunktionen, an dessen Ausgang die zusammengefaßten Kanäle ($A_1$, $A_2$) mit einer Frequenz von 16 kHz moduliert werden und ein Filter ($\widetilde{F}_2$) durchlaufen (Fig. 4).

10. Schaltungsanordnung nach einem der Ansprüche 7 bis 9, dadurch gekennzeichnet, daß zur Bildung einer 4-Kanal-Untergruppe ($C_1$, $C_2$) zwei mit der Abtastrate von 48 kHz arbeitende 2-Kanal-Untergruppen (z.B. $B_2$, $B_3$) in der Arbeitsrate um den Faktor 2(↑2) erhöht werden und eine ($B_3$) der 2-Kanal-Untergruppen einen Vorzeicheninverter für jede zweite Abtastprobe (±) durchläuft, daß für beide Kanäle anschließend untereinander gleiche Filter ($F_1^2$) und ein Modulator (x) mit 32 kHz Modulationsfrequenz sowie anschließend gleiche Filter ($F_2^2$) vorgesehen sind, daß für einen Kanal ($B_2$) ein Vorzeicheninverter (±) nachgeschaltet ist und beide Kanäle anschließend zusammengefaßt (+) sind (Fig. 5).

11. Schaltungsanordnung nach Anspruch 10, dadurch gekennzeichnet, daß der den untereinander gleichen Filtern ($F_1^2$) nachgeschaltete Schaltungsabschnitt ersetzt ist durch eine Schaltung (±), die nur für eine ($B_2$) der 2-Kanal-Untergruppen für jede zweite Abtastprobe das Vorzeichen invertiert, daß anschließend beide Kanäle zusammengefaßt (+) sind und gemeinsam einem Modulator (x) mit der Modulationsfrequenz von 32 kHz zugeführt sind, dem ein Filter ($\widetilde{F}_2^2$) nachgeschaltet ist (Fig. 5a).

12. Schaltungsanordnung nach Anspruch 10, dadurch gekennzeichnet, daß anstelle der untereinander gleichen Filter $(F_1^2)$ ein Richtungsfilter $(\widetilde{F}_1^2, \overline{\widetilde{F}}_1^2)$ mit zueinander komplementären Übertragungsfunktionen vorgesehen ist, dessen Ausgang der Modulator (x 32 kHz) und ein Filter $(\widetilde{F}_2^2)$ nachgeschaltet ist (Fig. 6).

13. Schaltungsanordnung nach einem der vorhergehenden Ansprüche, dadurch gekennzeichnet, daß zur Erzeugung einer 8-Kanal-Untergruppe $(D_1)$ für zwei bei der Arbeitsrate 96 kHz arbeitende 4-Kanal-Untergruppen $(C_1, C_2)$ die Arbeitsrate um den Faktor 2 erhöht und für eine 4-Kanal-Untergruppe $(C_2)$ das Vorzeichen jeder zweiten Arbeitsrate $(\pm)$ invertiert ist, daß für beide 4-Kanal-Untergruppen untereinander gleiche Schaltungen aus einem Filter $(F_1^4)$, aus einem Modulator mit einer Modulationsfrequenz von 64 kHz und einem weiteren Filter $(F_2^4)$ vorgesehen sind, und daß vor der Zusammenfassung (+) für die zweite 4-Kanal-Untergruppe $(C_1)$ das Vorzeichen jeder zweiten Arbeitsrate $(\pm)$ invertiert ist (Fig. 7), oder daß beide Kanäle nach Durchlaufen des ersten Filters $(F_1^4)$ nach Vorzeicheninversion jeder zweiten Abtastprobe der zweiten 4-Kanal-Untergruppe $(C_1)$ zusammengefaßt (+) und anschließend ein Modulator mit der Modulationsfrequenz von 64 kHz und ein Filter $(\widetilde{F}_2^4)$ nachgeschaltet sind (Fig. 7a), oder daß für beide 4-Kanal-Untergruppen unmittelbar nach Erhöhung der Arbeitsrate (↑2) auf 192 kHz ein Richtungsfilter $(\widetilde{F}_1^4, \overline{\widetilde{F}}_1^4)$ mit zueinander komplementären Übertragungsfunktionen vorgesehen ist, an dessen Ausgang der Modulator (64 kHz) und anschließend ein Filter $(\widetilde{F}_2^4)$ angeschaltet sind (Fig. 8).

14. Schaltungsanordnung nach einem der vorhergehenden Ansprüche, dadurch gekennzeichnet, daß zur Erzeugung einer 12-Kanal-Gruppe $(E_1$ bis $E_5)$ aus zwei 2-Kanal-Untergruppen $(B_6, B_1)$ nach Erreichen der Arbeitsrate von 96 kHz (Fig. 5) für beide 2-Kanal-Untergruppen $(B_6, B_1)$ untereinander gleiche Schaltungen zur Umkehrung des Vorzeichens jeder zweiten Abtastprobe $(\pm)$ sowie zur Erhöhung der Arbeitsrate um den Faktor 2 (↑2) und anschließend ein Filter $(F_3)$ vorgesehen sind, und anschließend die Zusammenfassung (+) nach Vorzeicheninversion jeder zweiten Abtastprobe $(\pm)$ einer 2-Kanal-Untergruppe $(B_1)$ erfolgt (Fig. 9), oder daß anstelle einzelner Filter $(F_3)$ ein Richtungsfilter $(\widetilde{F}_3, \overline{\widetilde{F}}_3)$ mit zueinander komplementären Übertragungsfunktionen vorgesehen ist (Fig. 10).

15. Schaltungsanordnung nach einem der vorhergehenden Ansprüche, dadurch gekennzeichnet, daß zur Erzeugung von Gruppen (z.B. $G_1, G_3, G_5$) aus 12-Kanal-Gruppen $(E_1, E_3, E_5)$ die Arbeitsrate um den Faktor 3 (↑3) auf 576 kHz erhöht ist unter Zwischenschaltung von

Filtern $(F_4, F_5)$ bzw. Vor- und Nachschaltung von Vorzeicheninvertern $(\pm)$ für jede zweite Abtastprobe (Fig. 11, 12, 13) oder daß nach Erreichen der 576-kHz-Arbeitsrate für die 12-Kanal-Gruppen $(E_2, E_4)$ ein Modulator mit der Modulationsfrequenz 144 kHz (x 144 kHz) vorgesehen ist dem ein Filter $(F_6)$ und gegebenenfalls ein Vorzeicheninverter $(\pm)$ für jede zweite Arbeitsrate nachgeschaltet ist (Fig. 14, 15), und daß die Lage der Filter-Durchlaß- und -Sperrbereiche sowie die Einführung der Vorzeicheninversion derart gewählt ist, daß die einzelnen 12-Kanal-Gruppen $(G_1$ bis $G_5)$ nach Zusammenfassung in einer Addierschaltung zwischen den Frequenzen 312 kHz bis 552 kHz in Normallage bzw. in Kehrlage zwischen den Frequenzen 24 kHz und 264 kHz erscheinen (Fig. 16).

16. Schaltungsanordnung nach einem der vorhergehenden Ansprüche, dadurch gekennzeichnet, daß zur Erzeugung von Gruppen bei einer Arbeitsrate von 576 kHz Richtungsfilter mit zueinander komplementären Übertragungsfunktionen verwendet sind, derart, daß zwei 12-Kanal-Gruppen $(E_1, E_5)$ in einem ersten Richtungsfilter $(\widetilde{F}_4, \overline{\widetilde{F}}_4)$, dessen Ausgang zum einen Eingang eines zweiten Richtungsfilters $(\widetilde{F}_5, \overline{\widetilde{F}}_5)$ führt, an dessen erstem Eingang die dritte 12-Kanal-Gruppe $(E_3)$ anliegt, und/oder daß zwei 12-Kanal-Gruppen $(E_2, E_4)$ nach Modulation mit 144 kHz in einem Richtungsfilter $(\widetilde{F}_6, \overline{\widetilde{F}}_6)$ zusammengefaßt sind, und daß die Filter-Sperr und Durchlaßbereiche sowie die Einführung der Vorzeicheninvertierung derart erfolgt, daß bei Zusammenfassung der resultierenden 12-Kanal-Gruppen $(G_1$ bis $G_5)$ diese zwischen den Frequenzen 312 kHz und 552 kHz in Normallage bzw. zwischen den Frequenzen 24 kHz und 264 kHz in Kehrlage erscheinen (Fig. 17, 18).

17. Schaltungsanordnung nach einem der vorhergehenden Ansprüche, dadurch gekennzeichnet, daß zur Erzeugung von 12-Kanal-Gruppen $(G_1, G_5)$ bei einer Arbeitsrate von 576 kHz 12-Kanal-Gruppen $(E_1, E_5)$ mit der Arbeitsrate 576 kHz einem Modulator mit 96 bzw. 192 kHz Modulationsfrequenz zugeführt werden und anschließend ein Filter $(\widetilde{F}_4)$ nachgeschaltet ist (Fig. 18a, 18b).

18. Schaltungsanordnung zur Durchführung des Verfahrens nach Anspruch 6, dadurch gekennzeichnet, daß jeweils zwei Kanäle $(A_1, \underline{A}_{11}$ bzw. $\underline{A}_2, A_5$ bzw. $A_7 \underline{A}_{10})$ über Richtungsfilter $(\widetilde{F}_{10}, \overline{\widetilde{F}}_{10}$ bzw. $\widetilde{F}_{11}, \overline{\widetilde{F}}_{11})$ zusammengefaßt sind (Fig. 19, 21).

19. Schaltungsandordnung nach einem der vorhergehenden Ansprüche, dadurch gekennzeichnet, daß zur Einführung eines Außerbands signals (4150 Hz bzw. 4175 Hz) Richtungsfilter $(\widetilde{F}_0, \overline{\widetilde{F}}_0$ bzw. $F_s, \overline{F}_s)$ mit zueinander komplementären Übertragungsfunktionen vorgesehen sind, in denen ein Audio-Kanal $(A_1)$ und das Außerbandsignal

(4150 Hz bzw. 4175 Hz) bei einer Arbeitsrate von 24 kHz zusammengefaßt sind, und daß bei Verwendung eines zusätzlichen Signalfilters ($F_S$) diesem das für den Audio-Kanal ($A_1$) verwendete Filter ($F_0$) unmittelbar vorgeschaltet ist (Fig. 22a, b).

## Revendications

1. Procédé pour la transposition numérique en fréquence de signaux audio en signaux d'un système de multiplexage en fréquence (transposition audio/multiplexage en fréquence) ou pour la transposition en fréquence de signaux à modulation par impulsions codées en signaux d'un système de multiplexage en fréquence (transposition modulation par impulsions codées/multiplexage en fréquence) et vice-versa, dans lequel les signaux initiaux sont présents dans une largeur de canal limitée en ce qui concerne la largeur de bande de fréquence, caractérisé en ce que pour former des échantillons dans le cas de la transposition audio/modulation en fréquence et vice-versa ou pour la transposition modulation par impulsions codées/multiplexage en fréquence et vice-versa, on utilise comme fréquence de travail de base une fréquence de travail dont la position en fréquence correspond à la sextuple valeur de la largeur du canal et que toutes les autres fréquences de travail utilisées dans le procédé de transposition sont des multiples entiers de la fréquence de travail de base.

2. Procédé suivant la revendication 1, caractérisé en ce que pour des transpositions modulation par impulsions codées/multiplexage en fréquence ou multiplexage en fréquence/modulation par impulsions codées, toutes les fréquences de travail sont des multiples entiers de la fréquence d'échantillonnage de base de modulation par impulsions codées (par exemple 8 kHz) utilisées dans le système de modulation par impulsions codées.

3. Procédé suivant une des revendications précédentes, caractérisé en ce que pour des systèmes avec des largeurs de bandes de transmission de 4 kHz on utilise comme fréquence de travail de base une fréquence d'échantillonnage de 24 kHz ou de multiples entiers de cette fréquence pour d'autres transformations dans des positions en fréquence plus élevées.

4. Procédé suivant une des revendications précédentes, caractérisé en ce que pour une largeur de canal de 4 kHz et une fréquence d'échantillonnage de base de modulation par impulsions codées de 8 kHz, pour la formation d'un groupe secondaire de 60 canaux (SG) à partir tout d'abord de 12 canaux individuels ($A_1$ à $A_{12}$) avec la fréquence d'échantillonnage de 8 kHz dans le cas de la transposition modulation par impulsions codées/multiplexage en fréquence ou de 24 kHz dans le cas de la transposition audio/multiplexage en fréquence, respectivement 2 canaux ($A_1$, $A_2$; $A_3$, $A_4$; ... $A_{11}$, $A_{12}$) sont réunis pour former six groupes de canaux ($B_1$ à $B_6$) et une fréquence de travail de 48 kHz est prévue pour ceux-ci ($B_1$ à $B_6$), que quatre de ces sous-groupes de 2 canaux (par exemple $B_2$ à $B_5$) sont réunis pour former deux sous-groupes de 4 canaux ($C_1$, $C_2$) avec une fréquence de travail de 96 kHz et qu'à partir de ceux-ci sont formés, avec une fréquence de travail de 192 kHz, un sous-groupe de 8 canaux ($D_1$) qui rest réuni, avec une fréquence de travail de 192 kHz, avec les deux autres sous-groupes de 2 canaux restants (par exemple $B_1$ et $B_6$) pour former un groupe de 12 canaux ($E_1$), et que cinq tels groupes de 12 canaux ($E_1$ à $E_5$), pour lesquels est respectivement prévue une fréquence de travail de 192 kHz, sont modulés et/ou filtrés individuellement, et qu'à une fréquence de travail de 576 kHz sont formées cinq bandes ($G_1$ à $G_5$) qui sont ensuite réunies, avec une fréquence de travail de 576 kHz, pour former un groupe secondaire (SG) (figure 1).

5. Procédé suivant la revendication 4, caractérisé en ce qu'à la place de la formation invididuelle (figures 11 à 16) des bandes individuelles ($G_1$ à $G_5$), trois de ces bandes (par exemple $G_1$, $G_3$, $G_5$) sont formées en commun à partir des groupes de 12 canaux qui leur sont associés ($E_1$, $E_3$, $E_5$) et les deux autres bandes ($G_2$, $G_4$) sont formées en commun à partir des deux groupes de 12 canaux restants qui leur sont associés ($E_2$, $E_4$) (figures 17 et 18) et les résultats obtenus sont réunis pour former le groupe secondaire (SG).

6. Procédé suivant une des revendications 1 à 3, caractérisé en ce que dans le cas d'une largeur de canal de 4 kHz et d'une fréquence d'échantillonnage de base de modulation par impulsions codées de 8 kHz, pour la formation d'un groupe de 12 canaux (E), la fréquence de travail est augmentée du facteur 3 (↑3) jusqu'à 24 kHz, pour 12 canaux utilisés avec la fréquence d'échantillonnage de 8 kHz ($A_1$ à $A_{12}$), que chaque canal traverse, éventuellement suivant le procédé de partage de temps, un filtre de même type ($F_0$) et ensuite pour certains canaux (par exemple $A_2$, $A_4$, $A_6$, $A_7$, $A_9$, $A_{12}$) un échantillon sur deux est inversé en signe ($\pm$), qu'ensuite pour tous les canaux la fréquence de travail est augmentée du facteur 5 jusqu'à 120 kHz et les canaux individuels sont ajoutés (+), éventuellement après traversée de modulateurs et de filtres, avec une fréquence de travail de 120 kHz, pour former un groupe de 12 canaux (figure 19).

7. Circuit pour la mise en oeuvre du procédé suivant une des revendications précédentes, caractérisé en ce que pour former un sous-groupe de 2 canaux (par exemple $B_1$ ou $B_2$ à $B_6$), la fréquence de travail est augmentée du facteur 3 jusqu'à 24 kHz, pour les 2 canaux ($A_1$, $A_2$), que dans les 2 canaux est respectivement prévu un filtre ($F_0$) dont la bande passante est comprise entre 4 kHz et 8 kHz, qu'un des 2 canaux (par exemple $A_2$) traverse un circuit ($\pm$) qui inverse le

signe un échantillon sur deux, et ensuite dans les 2 canaux la fréquence de travail est augmentée du facteur 2 jusqu'à 48 kHz, qu'ensuite dans les 2 canaux sont prévus d'autres filtres identiques entre eux ($F_1$, $F_2$) avec interposition d'un modulateur (x) avec une fréquence de modulation de 16 kHz, que dans le canal ($A_1$), pour lequel le signe n'est pas inversé pour le second échantillon, est branché en aval du filtre ($F_2$) un autre circuit pour inverser le signe un échantillon sur deux ($\pm$) et ensuite les deux canaux sont appliqués à un circuit de sommation (+) avec une fréquence de travail de 48 kHz (figure 2).

8. Circuit suivant la revendication 7, caractérisé en ce que les sections de circuit respectivement branchées en aval du premier des autres filtres ($F_1$) sont remplacées par une section de circuit dans laquelle un échantillon sur deux est inversé en signe ($\pm$) dans le premier canal ($A_1$), que 2 canaux sont ensuite réunis (+) et traversent un filtre ($\widetilde{F_s}$) après modulation (x) avec une fréquence de 16 kHz (figure 3).

9. Circuit suivant la revendication 7, caractérisé en ce que la section de circuit commençant respectivement avec le premier des autres filtres ($F_1$) est remplacée par un filtre à direction déterminée ($\widetilde{F_1}$, $\widetilde{\widetilde{F_1}}$) possédant des fonctions de transmission complémentaires à la sortie duquel les canaux réunis ($A_1$, $A_2$) sont modulés avec une fréquence de 16 kHz et traversent un filtre ($\widetilde{F_2}$) (figure 4).

10. Circuit suivant l'une des revendications 7 à 9, caractérisé en ce que pour la formation d'un sous-groupe de 4 canaux ($C_1$, $C_2$), la fréquence de travail de deux sous-groupes de 2 canaux (par exemple $B_2$, $B_3$) travaillant avec la fréquence d'échantillonnage de 48 kHz est augmentée du facteur 2 ($\uparrow$2) et un des sous-groupes de 2 canaux ($B_3$) traverse un inverseur de signe pour un échantillon sur deux ($\pm$), que pour les 2 canaux sont prévus ensuite des filtres identiques entre eux ($F_1^2$) et un modulateur (x) avec une fréquence de modulation de 32 kHz ainsi qu'ensuite des filtres identiques ($F_2^2$), et un inverseur de signe ($\pm$) est branché en aval pour un canal ($B_2$) et les 2 canaux sont ensuite réunis (+) (figure 5).

11. Circuit suivant la revendication 10, caractérisé en ce que la section de circuit branchée en aval des filtres identiques entre eux ($F_1^2$) est remplacée par un circuit ($\pm$ qui inverse le signe un échantillon sur deux seulement pour un ($B_2$) des sous-groupes de 2 canaux, qu'ensuite les 2 canaux sont réunis (+) et sont appliqués en commun à un modulateur (x) avec une fréquence de modulation de 32 kHz, en aval duquel est branché un filtre ($\widetilde{F_2^2}$) (figure 5a).

12. Circuit suivant la revendication 10, caractérisé en ce qu'à la place des filtres identiques entre eux ($F_1^2$) est prévu un filtre à direction déterminée ($\widetilde{F_1^2}$, $\widetilde{\widetilde{F_1^2}}$) possédant des fonctions de transmission complémentaires, en aval de la sortie duquel sont branchés le modulateur (x 32 kHz) et un filtre ($\widetilde{F_2^2}$) (figure 6).

13. Circuit suivant l'une des revendications précédentes, caractérisé en ce que pour la production d'un sous-groupe de 8 canaux ($D_1$), la fréquence de travail est augmentée du facteur 2 pour deux sous-groupes de 4 canaux ($C_1$, $C_2$) travaillant avec la fréquence de travail de 96 kHz et le signe d'une fréquence de travail sur deux ($\pm$) est inversé pour un sous-groupe de 4 canaux ($C_2$), que pour les deux sous-groupes de 4 canaux sont prévus des circuits identiques entre eux constitués par un filtre ($F_2^4$), un modulateur possédant une fréquence de modulation de 64 kHz et un autre filtre ($F_2^4$), et qu'avant la réunion (+) le signe d'une fréquence de travail sur deux ($\pm$) est inversé pour le second sous-groupe de 4 canaux ($C_1$) (figure 7), ou que les 2 canaux sont réunis (+) après la traversée du premier filtre ($F_1^4$) après inversion du signe d'un échantillon sur deux du second sous-groupe de 4 canaux ($C_1$) et un modulateur possédant le fréquence de modulation de 64 kHz et un filtre ($\widetilde{F_2^4}$) sont branchés en aval (figure 7a), ou que pour les deux sous-groupes de 4 canaux est prévu directement après l'augmentation de la fréquence de travail ($\uparrow$2) jusqu'à 192 kHz un filtre à direction déterminée ($\widetilde{F_1^4}$, $\widetilde{\widetilde{F_1^4}}$) possédant des fonctions de transmission complémentaires, à la sortie duquel sont branchés le modulateur (64 kHz) puis un filtre ($\widetilde{F_2^4}$) (figure 8).

14. Circuit suivant l'une des revendications précédentes, caractérisé en ce que pour produire un groupe de 12 canaux ($E_1$ à $E_5$), à partir de deux sous-groupes de 2 canaux ($B_6$, $B_1$) une fois qu'est atteinte la fréquence de travail de 96 kHz (figure 5) pour les deux sous-groupes de 2 canaux ($B_6$, $B_1$), sont prévus des circuits identiques entre eux pour inverser le signe d'un échantillon sur deux ($\pm$) ainsi que pour augmenter la fréquence de travail du facteur 2 ($\uparrow$2) et ensuite un filtre ($F_3$), et qu'ensuite a lieu la réunion (+) après inversion de signe d'un échantillon sur deux ($\pm$) d'un sous-groupe de 2 canaux ($B_1$) (figure 9), ou qu'à la place d'un filtre ($F_3$) est prévu un filtre à direction déterminée ($\widetilde{F_3}$, $\widetilde{\widetilde{F_3}}$) possédant des fonctions de transmission complémentaires (figure 10).

15. Circuit suivant l'une des revendications précédentes, caractérisé en ce que pour produire des groupes (par exemple $G_1$, $G_3$, $G_5$) à partir de groupes de 12 canaux ($E_1$, $E_3$, $E_5$) la fréquence de travail est augmentée du facteur 3 ($\uparrow$3) jusqu'à 576 kHz, avec interposition de filtres ($F_4$, $F_5$) ou respectivement branchement en amont et en aval d'inverseurs de signe ($\pm$)

pour un échantillon sur deux (figures 11, 12, 13), ou qu'une fois que la fréquence de travail de 576 kHz est atteinte pour les groupes de 12 canaux ($E_2$, $E_4$) est prévu un modulateur avec la fréquence de modulation de 144 kHz ($\times$ 144 kHz) en aval duquel est branché un filtre ($F_6$) et éventuellement un inverseur de signe ($\pm$) pour un fréquence de travail sur deux (figures 14, 15), et que la position des bandes passante et éliminée des filtres ainsi que l'introduction de l'inversion de signe sont choisies de manière que les groupes de 12 canaux individuels ($G_1$ à $G_5$), après réunion dans un circuit additionneur, apparaissent entre les fréquences de 312 kHz et 552 kHz en position normale et respectivement entre les fréquences de 24 kHz et 264 kHz en position inversée (figure 16).

16. Circuit suivant l'une des revendications précédentes, caractérisé en ce que pour produire des groupes à une fréquence de travail de 576 kHz sont prévus des filtres à direction déterminée possédant des fonctions de transmission complémentaires, de manière que deux groupes de 12 canaux ($E_1$, $E_5$) soient appliqués à un premier filtre à direction déterminée ($\widetilde{F}_4$, $\widetilde{\widetilde{F}}_4$) dont la sortie conduit à une entrée d'un second filtre à direction déterminée ($\widetilde{F}_5$, $\widetilde{\widetilde{F}}_5$), à la première entrée duquel est appliqué le troisième groupe de 12 canaux ($E_3$), et/ou que deux groupes de 12 canaux ($E_2$, $E_4$) sont réunis, après modulation avec une fréquence de 144 kHz, dans un filtre à direction déterminée ($\widetilde{F}_6$, $\widetilde{\widetilde{F}}_6$), et que les bandes éliminée et passante des filtres ainsi que l'introduction de l'inversion de signe s'effectuent de manière que, lors de la réunion des groupes de 12 canaux résultants ($G_1$ à $G_5$), ceux-ci apparaissent entre les fréquences de 312 kHz et 552 kHz en position normale et respectivement entre les fréquences de 24 kHz et 264 kHz en position inversée (figures 17, 18).

17. Circuit suivant l'une des revendications précédentes, caractérisé en ce que pour produire des groupes de 12 canaux ($G_1$, $G_5$) avec une fréquence de travail de 576 kHz, des groupes de 12 canaux ($E_1$, $E_5$) avec la fréquence de travail de 576 kHz, sont appliqués à un modulateur avec une fréquence de modulation de 96 ou 192 kHz et qu'en aval est branché un filtre ($\widetilde{F}_4$) (figures 18a, 18b).

18. Circuit pour la mise en oeuvre du procédé suivant la revendication 6, caractérisé en ce que 2 canaux respectifs ($A_1$, $A_{11}$ ou $A_2$, $A_5$ ou $A_7$, $A_{10}$) sont réunis par l'intermédiaire de filtres à direction déterminée ($\widetilde{F}_{10}$, $\widetilde{\widetilde{F}}_{10}$ ou respectivement $\widetilde{F}_{11}$, $\widetilde{\widetilde{F}}_{11}$) (figures 19, 21).

19. Circuit suivant l'une des revendications précédentes, caractérisé en ce que pour introduire un signal hors bande (4150 Hz ou respectivement 4175 Hz) sont prévus des filtres à direction déterminée ($\widetilde{F}_0$, $\widetilde{\widetilde{F}}_0$ ou $F_s$, $\overline{F}_s$) possédant des fonctions de transmission complémentaires, dans lesquelles sont réunis un canal audio ($A_1$) et le signal hors bande (4150 Hz ou 4175 Hz), à une fréquence de travail de 24 kHz, et que lors de l'utilisation d'un filtre de signaux supplémentaire ($F_s$), celui-ci est branché directement en amont du filtre ($F_0$) utilisé pour le canal audio ($A_1$) (figures 22a, b).

## Claims

1. Process for the digital frequency conversion of audio signals into signals of a frequency multiplex system (audio/FDM-conversion) or for the frequency conversion of pulse coded signals into signals of a frequency multiplex system (PCM/FDM-conversion) and vice versa, wherein the channel width of the original signals is limited in respect of frequency bandwidth, characterised in that for the generation of scanning samples, in the case of audio/FDM-conversion and vice versa and in the case of PCM/FDM-conversion and vice versa the frequency position of the fundamental operating rate which is used is six times the channel width, and that all the other operating rates employed in the conversion process represent whole numbered multiples of the fundamental operating rate.

2. Process as claimed in claim 1, characterised in that for the PCM/FDM-conversion and vice versa for the FDM/PCM-conversions all the operating rates represent whole numbered multiples of the fundamental PCM sampling rate (e.g. 8 kHz) used in the PCM system.

3. Process as claimed in one of the preceding claims, characterised in that for a system employing transmission bandwidths of 4 kHz a sampling frequency of 24 kHz is used as fundamental operating rate and whole numbered multiples of this frequency are used for other conversions in higher frequency positions.

4. Process as claimed in one of the preceding claims, characterised in that where the channel width amounts to 4 kHz and the fundamental PCM sampling rate amounts to 8 kHz, in order to form a 60-channel secondary group (SG) initially comprising 12 individual channels ($A_1$ to $A_{12}$) with the sampling rate of 8 kHz in the case of the PCM/FDM-conversion and 24 kHz in the case of the audio/FDM conversion, two channels ($A_1$, $A_2$; $A_3$, $A_4$; ... $A_{11}$, $A_{12}$) are in each case combined to form six 2-channel sub-groups ($B_1$ to $B_6$) and for these ($B_1$ to $B_6$) an operating rate of 48 kHz is provided, that four of these 2-channel sub-groups (e.g. $B_2$ to $B_5$) are combined to form two 4-channel sub-groups ($C_1$, $C_2$) at an operating rate of 96 kHz and from these two, at an operating rate of 192 kHz, an 8-channel sub-group ($D_1$) is formed which is combined with the remaining two 2-channel sub-groups (e.g. $B_1$ and $B_6$) to form a 12-channel group ($E_1$) at an operating rate of 192 kHz, and that five such 12-channel groups ($E_1$ to $E_5$) for each of which an operating rate of 192 kHz is provided, are individually modulated and/or filtered and five bands ($G_1$ to $G_5$) are produced at an operating rate of 576 kHz which are subsequently combined to form a secondary group (SG) at an operating rate of 576 kHz (Fig. 1).

5. Process as claimed in claim 4, characterised in that in place of the individual formation (Fig. 11 to 16) of the respective bands ($G_1$ to $G_5$) three of these bands (e.g. $G_1$, $G_3$, $G_5$) are commonly formed from the 12-channel groups ($E_1$, $E_3$, $E_5$) assigned thereto, and the two other bands ($G_2$, $G_4$) are commonly formed from the two remaining 12-channel groups ($E_2$, $E_4$) assigned thereto (Fig. 17 and 18), and the results obtained therefrom are combined to form the secondary group (SG).

6. Process as claimed in one of the claims 1 to 3, characterised in that where the channel width is 4 kHz and the fundamental PCM sampling rate is 8 kHz, for the formation of a 12-channel group (E), for twelve channels ($A_1$ to $A_{12}$) operated at the sampling rate of 8 kHz the operating rate is increased by the factor 3 ($\uparrow$3) to 24 kHz, that each channel passes through an identical filter ($F_o$), possibly in a time-sharing process, whereupon each second scanning sample is inverted in sign ($\pm$) for certain channels (e.g. $A_2$, $A_4$, $A_6$, $A_7$, $A_9$, $A_{12}$), that subsequently for all channels the operating rate is increased by the factor 5 to 120 kHz and, possibly having passed through modulators and filters, the individual channels are added (+) at an operating rate of 120 kHz to form the 12-channel group (Fig. 19).

7. Circuit arrangement for the implementation of the process claimed in one of the preceding claims, characterised in that for the formation of a 2-channel sub-group (e.g. $B_1$ and $B_2$ to $B_6$), for the two channels ($A_1$, $A_2$) the operating rate is increased by the factor 3 to 24 kHz, that each of the two channels contains a filter ($F_o$) whose pass band extends between 4 kHz and 8 kHz, that one of the two channels (e.g. $A_2$) passes through a circuit ($\pm$) which inverts the sign of every second scanning sample and subsequently in both channels the operating rate is increased by the factor 2 to 48 kHz, that the two channels are subsequently provided with further filters ($F_1$, $F_2$) which are identical to one another with an interposed modulator ($\times$) having 16 kHz modulation frequency, that in the channel ($A_1$) for which the sign for the second scanning sample is not inverted, the filter ($F_2$) is followed by a further circuit which serves to invert the sign for every second scanning sample ($\pm$) and the two channels subsequently lead to an adder circuit (+) at an operating rate of 48 kHz (Fig. 2).

8. Circuit arrangement as claimed in claim 7, characterised in that the circuit sections which follow the first of the additional filters ($F_1$) are each replaced by a circuit section wherein, in the first channel ($A_1$), each second scanning sample is inverted in sign ($\pm$), that the two channels are subsequently combined (+) and following modulation ($\times$) at a frequency of 16 kHz pass through a filter ($\widetilde{F}_2$) (Fig. 3).

9. Circuit arrangement as claimed in claim 7, characterised in that the circuit section which commences with the first of the additional filters ($F_1$) is in each case replaced by a directional filter ($\widetilde{F}_1$, $\widetilde{\widetilde{F}}_1$) having complementary transmission functions at the output of which the combined channels ($A_1$, $A_2$) are modulated at a frequency of 16 kHz and pass through a filter ($\widetilde{F}_2$) (Fig. 4).

10. Circuit arrangement as claimed in one of the claims 7 to 9, characterised in that for the formation of a 4-channel sub-group ($C_1$, $C_2$) two 2-channel sub-groups (e.g. $B_2$, $B_3$) which operate at a sampling rate of 48 kHz are increased in operating rate by the factor 2($\uparrow$2) and one ($B_3$) of the 2-channel sub-groups passes through a sign inverter for every second scanning sample ($\pm$), and that both the channels are subsequently provided with filters ($F_1^2$) which are identical to one another and a modulator ($\times$) of 32 kHz modulation frequency and then with identical filters $F_2^2$), that one channel ($B_2$) is followed by a sign inverter ($\pm$) and the two channels are subsequently combined (+) (Fig. 5).

11. Circuit arrangement as claimed in claim 10, characterised in that the circuit section which follows the filters ($F_1^2$) which are identical to one another is replaced by a circuit ($\pm$) which, only in the case of one ($B_2$) of the 2-channel sub-groups, inverts the sign for every second scanning sample and that subsequently the two channels are combined (+) and commonly lead to a modulator ($\times$) with the modulation frequency of 32 kHz which is followed by a filter ($\widetilde{F}_2^2$) (Fig. 5a).

12. Circuit arrangement as claimed in claim 10, characterised in that the filters ($F_1^2$) which are identical to one another are replaced by a directional filter ($\widetilde{F}_1^2$, $\widetilde{\widetilde{F}}_1^2$) which possesses transmission functions which are complementary to one another and whose output is followed by the modulator ($\times$ 32 kHz) and a filter ($\widetilde{F}_2^2$) (Fig. 6).

13. Circuit arrangement as claimed in one of the preceding claims, characterised in that in order to produce an 8-channel sub-group ($D_1$), for two 4-channel sub-groups ($C_1$, $C_2$) which operate at the operating rate of 96 kHz the operating rate is increased by the factor 2, and for a 4-channel sub-group ($C_2$) the sign of every second operating rate is inverted ($\pm$), that both the 4-channel sub-groups are provided with circuits identical to one another composed

of a filter $(F_1^4)$, a modulator possessing a modulation frequency of 64 kHz and a further filter $(F_2^4)$, and that prior to the combination (+) for the second 4-channel sub-group $(C_1)$ the sign of every second operating rate (±) is inverted (Fig. 7), or that having passed through the first filter $(F_1^4)$ and following the sign inversion of every second scanning sample of every second sample specimen of the second 4-channel sub-group $(C_1)$ the two channels are combined (+) and there subsequently follows a modulator having a modulation frequency of 64 kHz and a filter $(\widetilde{F}_2^4)$ (Fig. 7a), or that immediately following the increase in the operating rate (↑2) to 192 kHz the two 4-channel sub-groups are provided with a directional filter $(\widetilde{F}_1^4, \overline{\widetilde{F}}_1^4)$ which possesses transmission functions which are complementary to one another and whose output is connected to the modulator (64 kHz) and subsequently to a filter $(\widetilde{F}_2^4)$ (Fig. 8).

14. Circuit arrangement as claimed in one of the preceding claims, characterised in that for the production of a 12-channel group $(E_1$ to $E_5)$ from two 2-channel sub-groups $(B_6, B_1)$ when an operating rate of 96 kHz has been reached (Fig. 5) the two 2-channel sub-groups $(B_6, B_1)$ are provided with circuits which are identical to one another for inverting the sign of every second scanning sample (±) and for increasing the operating rate by the filter 2(↑2) and are subsequently provided with a filter $(F_3)$, and that then the combination (+) takes place following the sign inversion of every second scanning sample specimen (±) of a 2-channel sub-group $(B_1)$ (Fig. 9), or that individual filters $(F_3)$ are replaced by a directional filter $(\widetilde{F}_3, \overline{\widetilde{F}}_3)$ which possesses transmission functions which are complementary to one another (Fig. 10).

15. Circuit arrangement as claimed in one of the preceding claims, characterised in that for the production of groups (e.g. $G_1, G_3, G_5)$ from 12-channel groups $(E_1, E_3, E_5)$, the operating rate is increased by the factors 3 (↑3) to 576 kHz with the interposition of filters $(F_4, F_5)$ and preceding and following sign inverters (±) for every second scanning sample (Fig. 11, 12, 13) or that when the 576 kHz operating rate has been reached the 12-channel groups $(E_2, E_4)$ are provided with a modulator which possesses the modulation frequency 144 kHz (× 144 kHz) which is followed by a filter $(F_6)$ and possibly by a sign inverter (±) for every second operating rate (Fig. 14, 15), and that the position of the filter pass bands and stop bands and the initiation of the sign inversion are selected to be such that having been combined in an adder circuit the individual 12-channel groups $(G_1$ to $G_5)$ appear between the frequencies 312 kHz to 552 kHz in the normal position and between the frequencies 24 kHz and 264 kHz in the inverse position (Fig. 16).

16. Circuit arrangement as claimed in one of the preceding claims, characterised in that for the production of groups at an operating rate of 576 kHz, directional filters are used which possess transmission functions which are complementary to one another in such manner that two 12-channel groups $(E_1, E_5)$ are combined in a first directional filter $(\widetilde{F}_4, \overline{\widetilde{F}}_4)$ whose output leads to the first input of a second directional filter $(\widetilde{F}_5, \overline{\widetilde{F}}_5)$ and whose first input is supplied with the third 12-channel group $(E_3)$, and/or that two 12-channel groups $(E_2, E_4)$, following modulation at 144 kHz, are combined in a directional filter $(\widetilde{F}_6, \overline{\widetilde{F}}_6)$, and that the filter stop bands and pass bands and the initiation of the sign inversion are such that when the resultant 12-channel groups $(G_1$ to $G_5)$ are combined these appear between the frequencies 312 kHz and 552 kHz in the normal position and between the frequencies 24 kHz and 264 kHz in the inverse position (Fig. 17, 18).

17. Circuit arrangement as claimed in one of the preceding claims, characterised in that for the production of 12-channel groups $(G_1, G_5)$ at an operating rate of 576 kHz, 12-channel groups $(E_1, E_5)$ at an operating rate of 576 kHz are fed to a modulator of 96 or 192 kHz and a filter $(\widetilde{F}_4)$ is subsequently connected (Fig. 18a, 18b).

18. Circuit arrangement for the implementation of the process claimed in claim 6, characterised in that two channels $(A_1, A_{11}$ and $A_2, A_5$ and $A_7, A_{10})$ are in each case combined via directional filters $(\widetilde{F}_{10}, \overline{\widetilde{F}}_{10}$ and $\widetilde{F}_{11}, \overline{\widetilde{F}}_{11})$ (Fig. 19, 21).

19. Circuit arrangement as claimed in one of the preceding claims characterised in that for the introduction of an outer band signal (4150 Hz and 4175 Hz) directional filters $(\widetilde{F}_0, \overline{\widetilde{F}}_0$ and $\widetilde{F}_S, \overline{\widetilde{F}}_S)$ are provided which possess transmission functions which are complementary to one another and in which an audio-channel $(A_1)$ and the outer band signal (4150 Hz and 4175 Hz) are combined at an operating rate of 24 kHz, and that when an additional signal filter $(F_S)$ is used this is directly preceded by the filter $(F_0)$ used for the audio-channel $(A_1)$ (Fig. 22a, b).

| | |
|---|---|
| $\boxed{F_0}$ | Filter $F_o$ |
| $\boxed{F_1{}^2}$ | Gleiches Filter wie $F_1$ jedoch mit z.B. doppelter Arbeitsrate |
| | Durchlaßbereich eines Filters |
| | Sperrbereich eines Filters |
| $\boxed{\bar{F}_1}$ | Filter das zu $F_1$ komplementär ist als Beispiel |
| $\xrightarrow{\quad} \atop 48$ | Beispielsweise Arbeitsrate von 48 kHz an der angegebenen Schaltungsstelle |
| $\text{(↑2)}$ | Beispielsweise Verdoppelung der Abtastrate durch Auffüllen von Nullen an den neu eingeführten Abtastmomenten |
| $\text{(X)}$ ↑ 16 kHz | Modulation mit beispielsweise 16 kHz |
| $\text{(±)}$ | Multiplikation mit der durch Gleichung (4) definierten Folge, d.h. bei jeder zweiten Abtastprobe wird das Vorzeichen invertiert |

Tabelle 1

1

# FIG 1

FIG 2

# FIG 3

in FIG.2

16kHz
(=48/3)

# FIG 4

# FIG 5

# FIG 5a

in FIG. 5

# FIG 6

# FIG 7

$C_1$ · 96 · (÷2) · 192 · $F_1^4$ · $C_1^{(2)}$ 192 · (×) · $C_1^{(3)}$ 192 · $F_2^4$ · $C_1^{(4)}$ 192 · (÷) · $C_1^{(5)}$ 192

64 kHz (= 192/3)

(+) → $D_1$ 192

$C_2$ · 96 · (±) · $C_2^{(1)}$ 96 · (÷2) · 192 · $F_1^4$ · $C_2^{(2)}$ 192 · (×) · $C_2^{(3)}$ 192 · $F_2^4$ · $C_2^{(4)}$ 192

64 kHz

$C_1$
$C_2$
$C_2^{(1)}$
$F_1^4$
$C_1^{(2)}$
$C_2^{(2)}$
$C_1^{(3)}$
$C_2^{(3)}$
$F_2^4$
$C_1^{(4)}$
$C_2^{(4)}$
$C_1^{(5)}$
$D_1$

0   32   64   96   128   160   192

# FIG 7a

# FIG 8

$C_1$ — 96 — (↑2) — 192 — $\tilde{\tilde{F}}^4_1$

$C_2$ — 96 — (±) — $C_2^{(1)}$ 96 — (↑2) — 192 — $\tilde{F}^4_1$

$C_1^{(6)} + C_2^{(2)}$ — 192 — (X) — $D_1^{(0)}$ 192 — $\tilde{F}^4_2$ — 192 — $D_1$

64 kHz (= 192/3)

$C_1$   $C_2$   $C_2^{(1)}$   $\tilde{\tilde{F}}^4_1$   $\tilde{F}^4_1$   $C_2^{(6)} + C_2^{(2)}$   $D_1^{(0)}$   $\tilde{F}^4_2$   $D_1$

# FIG 9

**FIG 10**

# FIG 11

# FIG 12

# FIG 13

# FIG 14

# FIG 15

# FIG 16

FIG 17

FIG 18

# FIG 18 a

# FIG 18b

$E_5 \circ \rightarrow$ $E_3 \rightarrow G_3$ (FIG.12) $\xrightarrow{192}$ ⟶ $E_5^{(2)}$ 576 ⊗ $E_5^{(3)}$ 576 $\boxed{\tilde{F}_4}$ $E_5^{(4)}$ 576 ⊕± 576 $\circ G_5$

192kHz (=576/3)

FIG 19

# FIG 20

$F_7$
0    28 32    60    88 92    120

$F_8$
52 56  64 68

$F_9$
16 20    100 104

$F_{10}$
8 12    108 112

$F_{11}$
12 16    104 108

$F_{12}$
20 24    96 100

$F_{13}$
24 28    92 96  104 108

B
1    12    12    1
0    8    56 64    112  120
60

# FIG 21

$A_1^{(8)}$
120

$\tilde{F}_{10}$

$A_{11}^{(7)}$
120

$A_{11}^{(8)}$
120

40 kHz

$\tilde{\tilde{F}}_{10}$

$A_1^{(9)} + A_{11}^{(9)}$

$A_2^{(8)}$

$\tilde{F}_{11}$

$A_5^{(8)}$

$\tilde{\tilde{F}}_{11}$

$A_2^{(9)} + A_5^{(9)}$

$A_{10}^{(8)}$

$\tilde{F}_{11}$

$A_7^{(8)}$

$\tilde{\tilde{F}}_{11}$

$A_7^{(9)} + A_{10}^{(9)}$

# FIG 22